(19) **Europäisches Patentamt / European Patent Office / Office européen des brevets**

(11) **EP 4 561 197 A1**

(12) **EUROPEAN PATENT APPLICATION**
published in accordance with Art. 153(4) EPC

(43) Date of publication:
**28.05.2025 Bulletin 2025/22**

(21) Application number: **23851487.1**

(22) Date of filing: **30.06.2023**

(51) International Patent Classification (IPC):
**H04W 52/18** (2009.01)

(52) Cooperative Patent Classification (CPC):
**H04W 4/02; H04W 52/18; H04W 52/24**

(86) International application number:
**PCT/CN2023/104978**

(87) International publication number:
**WO 2024/032260 (15.02.2024 Gazette 2024/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.08.2022 CN 202210966591**

(71) Applicant: **Huawei Technologies Co., Ltd.
Shenzhen, Guangdong 518129 (CN)**

(72) Inventors:
• **YU, Yingjie
  Shenzhen, Guangdong 518129 (CN)**
• **HUANG, Su
  Shenzhen, Guangdong 518129 (CN)**

(74) Representative: **MERH-IP Matias Erny Reichl Hoffmann
Patentanwälte PartG mbB
Paul-Heyse-Straße 29
80336 München (DE)**

(54) **COMMUNICATION METHOD AND APPARATUS, STORAGE MEDIUM, AND CHIP SYSTEM**

(57) A communication method and apparatus, a storage medium, and a chip system are provided and relate to the field of communication technologies, and are used to provide a power control manner used when a terminal device sends a sidelink positioning reference signal. In this application, a first terminal device receives a power control parameter from a network device, and sends a first sidelink positioning reference signal based on a target transmit power determined by using the power control parameter. The power control parameter has an association relationship with a resource pool of a sidelink positioning reference signal. Therefore, the first terminal device may determine a more appropriate transmit power of the sidelink positioning reference signal based on the power control parameter, so that not only quality of the sidelink positioning reference signal can be improved, thereby improving a success rate of sending the sidelink positioning reference signal, but also mutual interference between signals sent between terminal devices can be reduced as much as possible.

First terminal device — Network device — Second terminal device

301: The network device determines a power control parameter

302: Power control parameter

303: Determine a target transmit power based on the power control parameter

304: First sidelink positioning reference signal

FIG. 3

**Description**

CROSS-REFERENCE TO RELATED APPLICATIONS

This application claims priority to Chinese Patent Application No. 202210966591.2, filed with the China National Intellectual Property Administration on August 12, 2022 and entitled "COMMUNICATION METHOD AND APPARATUS, STORAGE MEDIUM, AND CHIP SYSTEM", which is incorporated herein by reference in its entirety.

TECHNICAL FIELD

This application relates to the field of communication technologies, and in particular, to a communication method and apparatus, a storage medium, and a chip system.

BACKGROUND

With rapid development of communication technologies, high-precision positioning is gradually determined as an important research project in a 5th generation (5th Generation Mobile Networks or 5th Generation Wireless Systems, 5G) mobile communication system of the 3rd generation partnership project (3rd Generation Partnership Project, 3GPP). Scenarios of new radio (New Radio, NR) positioning mainly include: enhanced mobile broadband (enhanced Mobile Broadband, eMBB) outdoor, eMBB indoor, ultra-reliable low-latency communication (Ultra-Reliable Low-Latency Communication, URLLC), and massive machine type of communication (massive Machine Type of Communication, mMTC)/internet of things (Internet of Things, IOT). NR positioning also requires characteristics such as high security, scalability, high availability, and precision assurance in high-speed applications.

Current positioning technologies mainly include uplink positioning, downlink positioning, and uplink and downlink positioning. In an uplink positioning process, a network device (for example, a base station) measures a reference signal sent by a terminal device. In a downlink positioning process, a terminal device measures a positioning reference signal sent by a network device. In uplink and downlink positioning, both a terminal device and a network device need to measure a received signal. With development of technologies such as an internet of vehicles technology and an autonomous driving technology, research based on sidelink positioning in the future gradually attracts attention from the academic and industrial circles.

In addition, control of a transmit power of a signal in a wireless communication system is very important. For example, through control of a power of an uplink signal, the terminal device can not only ensure quality of uplink data, but also reduce interference to a system and another user as much as possible, thereby prolonging use time of a battery of the terminal device. Through control of a power of an uplink signal, the base station can enable uplink transmission to adapt to different wireless transmission environments, including a path loss, a shadow, fast fading, interference from another terminal device in a cell and between cells, and the like. However, in a scenario based on sidelink positioning, currently, there is no power control mechanism.

SUMMARY

Embodiments of this application provide a communication method and apparatus, a storage medium, and a chip system, to provide a power control manner used when a terminal device sends a sidelink positioning reference signal.

**According to a first aspect,** this application provides a first communication method. The method may be performed by a first terminal device, or may be performed by a module, a unit, or a chip inside the first terminal device. In this application, an example in which the method is performed by the first terminal device is used for description. The method includes:

The first terminal device receives a power control parameter from a network device, where the power control parameter has an association relationship with a resource pool of a sidelink positioning reference signal. The first terminal device determines a target transmit power based on the power control parameter. The first terminal device sends a first sidelink positioning reference signal based on the target transmit power.

The network device indicates the power control parameter to the terminal device, and the power control parameter has the association relationship with the resource pool of the sidelink positioning reference signal. Therefore, the first terminal device may determine a more appropriate transmit power of the sidelink positioning reference signal based on the power control parameter, so that not only quality of the sidelink positioning reference signal can be improved, thereby improving a success rate of sending the sidelink positioning reference signal, but also mutual interference between signals sent between terminal devices can be reduced as much as possible.

During application, the network device may configure a resource pool for transmitted data and/or a transmitted signal. For example, the network device may configure the resource pool for the sidelink positioning reference signal of the first terminal device, and a resource in the resource pool is used by the first terminal device to send the sidelink positioning reference signal. Further, the network device may further configure a parameter for the resource pool. For example, the network device configures a parameter (where the parameter includes the power control parameter) for the resource pool of the sidelink positioning reference signal. When the first terminal device needs to perform power control on the sent sidelink positioning reference signal, the first terminal device may determine the transmit power of the sidelink positioning reference signal based on the parameter configured for the resource pool of the sidelink positioning reference signal, so that not only the quality of the sidelink positioning reference signal can be improved, thereby improving the success rate of sending the sidelink positioning reference signal, but also the mutual interference between the sidelink positioning reference signals sent between the terminal devices can be reduced as much as possible.

In a possible implementation, the power control parameter may include a first parameter. The first parameter includes a third parameter and/or a downlink path loss adjustment coefficient. The third parameter is an initial power control value based on a downlink path loss of the first terminal device. In this way, in a process of determining the transmit power of the sidelink positioning reference signal, the first terminal device may consider impact of the downlink path loss, so that the transmit power of the sidelink positioning reference signal can be more appropriately determined. In addition, the downlink path loss obtained through measurement may be adjusted based on the downlink path loss adjustment coefficient, so that the more appropriate transmit power of the sidelink positioning reference signal can be obtained.

In a possible implementation, when the network device does not configure the downlink path loss adjustment coefficient, the downlink path loss adjustment coefficient is 1. In this way, when the network device does not configure the downlink path loss adjustment coefficient, the first terminal device may determine the target transmit power based on the downlink path loss obtained through measurement. In this way, the target transmit power can be determined based on maximum impact that may be caused by the downlink path loss, so that the target transmit power is more appropriate.

In another possible implementation, the power control parameter may include a second parameter. The second parameter includes a fourth parameter and/or a sidelink path loss adjustment coefficient, and the fourth parameter is an initial power control value based on a sidelink path loss of the first terminal device. In this way, in a process of determining the transmit power of the sidelink positioning reference signal, the first terminal device may consider impact of the sidelink path loss, so that the transmit power of the sidelink positioning reference signal can be more appropriately determined. In addition, the sidelink path loss obtained through measurement may be adjusted based on the sidelink path loss adjustment coefficient, so that the more appropriate transmit power of the sidelink positioning reference signal can be obtained.

In another possible implementation, when the network device does not configure the sidelink path loss adjustment coefficient, the sidelink path loss adjustment coefficient is 1. In this way, when the network device does not configure the sidelink path loss adjustment coefficient, the first terminal device may determine the target transmit power based on the sidelink path loss obtained through measurement. In this way, the target transmit power can be determined based on maximum impact that may be caused by the sidelink path loss, so that the target transmit power is more appropriate.

In a possible implementation, the first parameter and/or the second parameter are/is carried in a sidelink resource pool (SL-resource Pool) message, for example, may be carried in a sidelink power control (SL-power control) field in the sidelink resource pool (SL-resource Pool) message. In this way, this is more compatible with a conventional technology.

In a possible implementation, the first terminal device determines the target transmit power based on a first transmit power. The first transmit power is determined based on the first parameter and the downlink path loss. In this way, in a process of determining the target transmit power, the first terminal device may consider impact caused by a downlink path, so that a more appropriate target transmit power can be determined. For another example, the first transmit power is determined based on the first parameter, the downlink path loss, and a quantity of resources occupied by the first sidelink positioning reference signal. In this way, the target transmit power may be determined with reference to the quantity of resources occupied by the first sidelink positioning reference signal, so that a result can be more appropriate.

In a possible implementation, the first terminal device determines the target transmit power based on a second transmit power. The second transmit power is determined based on the second parameter and the sidelink path loss. In this way, in a process of determining the target transmit power, the first terminal device may consider impact caused by a sidelink path, so that a more appropriate target transmit power can be determined. For another example, the second transmit power is determined based on the second parameter, the sidelink path loss, and a quantity of resources occupied by the first sidelink positioning reference signal. In this way, the target transmit power may be determined with reference to the quantity of resources occupied by the first sidelink positioning reference signal, so that a result can be more appropriate.

In a possible implementation, when the network device does not configure the third parameter, the first transmit power includes a smaller value of a third transmit power and a fourth transmit power. The third transmit power includes a transmit power of the first terminal device based on a channel busy ratio (Channel Busy Ratio, CBR) of a resource pool corresponding to the first sidelink positioning reference signal and a transmission priority corresponding to the first sidelink positioning reference signal. The fourth transmit power includes a transmit power of the first terminal device. In this way, when the network device does not configure the third parameter, the first terminal device may determine the target transmit power based on a capability of the terminal device and a capability of the terminal device in conditions of the CBR and the transmission priority, so that the determined target transmit power can better match an actual capability of the first terminal device.

In a possible implementation, when the network device does not configure the fourth parameter, the second transmit power includes a smaller value of a third transmit power and a fourth transmit power. In this way, when the network device does not configure the fourth parameter, the first terminal device may determine the target transmit power based on a capability of the terminal device and a capability of the terminal device in conditions of the CBR and the transmission priority, so that the determined target transmit power can better match an actual capability of the first terminal device.

In a possible implementation, the first terminal device determines the target transmit power based on a smaller value of the first transmit power and the second transmit power. In this way, the target transmit power can be reduced as much as possible, and power consumption of the terminal device can be reduced.

In a possible implementation, the first terminal device may estimate the downlink path loss based on a downlink signal. For example, the first terminal device receives the downlink signal from the network device, and the first terminal device estimates the downlink path loss based on a measurement result obtained by measuring the downlink signal.

In this application, the first terminal device estimates the sidelink path loss in a plurality of manners. For example, in a possible implementation, the first terminal device receives first information from a second terminal device, where the first information includes information about a receive power of a sidelink signal or information about the sidelink path loss from the first terminal device. The first terminal device determines the sidelink path loss based on the first information. In this implementation, the first terminal device may send the sidelink signal used to determine the sidelink path loss, so that the second terminal device measures the sidelink signal. In this solution, the sidelink path loss is determined based on information transmitted between the first terminal device and the second terminal device through a sidelink, so that accuracy of the sidelink path loss can be improved.

In a possible implementation, the first information further includes a resource identifier of the sidelink signal from the first terminal device, and/or a resource set identifier corresponding to a resource of the sidelink signal from the first terminal device. A part or all of the two pieces of information may be included in the first information, or may not be included in the first information. Subsequently, the part of content is described by using an example in which the two pieces of information are included in the first information. In this way, the first terminal device may determine the sidelink signal corresponding to the receive power included in the first information, and then determine the sidelink path loss based on a transmit power of the sidelink signal and the receive power in the first information.

For example, the first information includes one of the following content: information about a receive power of a first sidelink signal, where the first sidelink signal is a sidelink signal received by the second terminal device from the first terminal device, and a type of the first sidelink signal includes a sidelink positioning reference signal; information about a receive power of a second sidelink signal, where the second sidelink signal is a sidelink signal received by the second terminal device from the first terminal device, and a type of the second sidelink signal includes a physical sidelink shared channel (physical sidelink shared channel, PSSCH) demodulation reference signal (demodulation reference signal, DMRS) or a physical sidelink control channel (physical sidelink control channel, PSCCH) DMRS; or information about the sidelink path loss, where the information about the sidelink path loss is determined based on a first sidelink signal or a second sidelink signal. The sidelink path loss may be determined between the first terminal device and the second terminal device based on the sidelink positioning reference signal, the PSSCH DMRS, or the PSCCH DMRS, so that flexibility of the solution can be improved.

In a possible implementation, before the first terminal device receives the first information from the second terminal device, the first terminal device sends first configuration information to the second terminal device, where the first configuration information indicates information about a sidelink signal used to determine the sidelink path loss. In this way, the second terminal device may perform measurement based on the sidelink signal configured by using the first configuration information, so that a process of determining the sidelink path loss can be better managed and controlled.

For example, the first configuration information includes at least one of information about a first signal type, a first resource identifier, or a first resource set identifier. The first signal type is a type of the sidelink signal used to determine the sidelink path loss. With reference to the foregoing example, the first resource identifier may include a resource identifier of the first sidelink signal. The first resource set identifier may include a resource set identifier corresponding to a resource of the first sidelink signal. It may be learned that there are a plurality of manners of configuring the sidelink signal by using the first configuration information, and the manners are flexible, so that flexibility of the solution can be improved.

In a possible implementation, the first signal type includes a sidelink positioning reference signal type. Because the determined target transmit power is a transmit power of the first sidelink positioning reference signal, the sidelink path loss determined based on the sidelink positioning reference signal can more accurately reflect an environment faced by the first sidelink positioning reference signal, and then accuracy of the target transmit power can be improved.

In another possible implementation, the first signal type includes a PSSCH DMRS type and/or a PSCCH DMRS type. Because the second terminal device may further measure a PSSCH DMRS and/or a PSCCH DMRS, and feed back the first information based on the measurement result, so that flexibility of the solution can be improved. In addition, if the first signal type does not include the sidelink positioning reference signal, the first terminal device may not need to send the sidelink positioning reference signal to determine the sidelink path loss, so that a quantity of signals sent by the first terminal device can be reduced, and power consumption of the first terminal device can be reduced.

In another possible implementation, the first configuration information further includes: information indicating that the PSSCH DMRS belongs to the sidelink signal used to determine the sidelink path loss, or information indicating that the PSSCH DMRS does not belong to the sidelink signal used to determine the sidelink path loss; and/or information indicating that the PSCCH DMRS belongs to the sidelink signal used to determine the sidelink path loss, or information indicating that the PSCCH DMRS does not belong to the sidelink signal used to determine the sidelink path loss. In this way, flexibility of the solution can be improved.

In this application, the first terminal device may send the first configuration information to the second terminal device through a PC5 interface, or may send the first configuration information to the network device, so that the network device sends the first configuration information to the second terminal device. In another possible implementation, the first configuration information may alternatively be configured by the network device for the second terminal device. For example, the network device may send the first configuration information to the second terminal device (for example, send the first configuration information by using a radio resource control (radio resource control, RRC) message).

This application provides another manner of determining the sidelink path loss. The first information includes information about a transmit power of a sidelink signal sent by the second terminal device. In this implementation, the second terminal device may send the sidelink signal used to determine the sidelink path loss, so that the first terminal device measures the sidelink signal. For example, the first information includes information about a transmit power of a third sidelink signal, where the third sidelink signal is from the second terminal device, and a type of the third sidelink signal includes a sidelink positioning reference signal; and/or information about a transmit power of a fourth sidelink signal, where the fourth sidelink signal is from the second terminal device, the third sidelink signal includes a sidelink positioning reference signal, and a type of the fourth sidelink signal includes a PSSCH DMRS or a PSCCH DMRS. In this solution, the sidelink path loss is determined based on information transmitted between the first terminal device and the second terminal device through a sidelink, so that accuracy of the sidelink path loss can be improved.

In a possible implementation, when the first terminal device obtains a receive power of the third sidelink signal, the first terminal device determines the sidelink path loss based on the receive power of the third sidelink signal and the transmit power of the third sidelink signal. Because the determined target transmit power is a transmit power of the first sidelink positioning reference signal, the sidelink path loss determined based on the sidelink positioning reference signal can more accurately reflect an environment faced by the first sidelink positioning reference signal, and then accuracy of the target transmit power can be improved.

In another possible implementation, when the first terminal device does not obtain a receive power of the third sidelink signal, the first terminal device determines the sidelink path loss based on the receive power of the fourth sidelink signal and the transmit power of the fourth sidelink signal. In this way, flexibility of the solution can be improved. In addition, because the fourth sidelink signal is a signal transmitted between the second terminal device and the first terminal device based on a sidelink, the fourth sidelink signal can also accurately reflect the sidelink path loss, and then accuracy of the target transmit power can be improved.

In a possible implementation, before the first terminal device determines the sidelink path loss based on the first information, the first terminal device receives second configuration information, where the second configuration information indicates information about a sidelink signal used to determine the sidelink path loss. In this way, the second terminal device may perform measurement based on the sidelink signal configured by using the first configuration information, so that a process of determining the sidelink path loss can be better managed and controlled.

For example, the second configuration information includes at least one of information about a second signal type, a second resource identifier, or a second resource set identifier. The information about the second signal type. The second signal type is a type of the sidelink signal used to determine the sidelink path loss. With reference to the foregoing example, the second resource identifier may include a resource identifier of the third sidelink signal. The second resource set identifier may include a resource set identifier corresponding to a resource of the third sidelink signal. It may be learned that there are a plurality of manners of configuring the sidelink signal by using the first configuration information, and the manners are flexible, so that flexibility of the solution can be improved.

In a possible implementation, the second signal type includes a sidelink positioning reference signal type. If the second signal type includes the sidelink positioning reference signal, because the determined target transmit power is a transmit power of the first sidelink positioning reference signal, the sidelink path loss determined based on the sidelink positioning reference signal can more accurately reflect an environment faced by the first sidelink positioning reference signal, and then accuracy of the target transmit power can be improved.

In another possible implementation, the second signal type further includes a PSSCH DMRS type and/or a PSCCH DMRS type. Because the first terminal device may further measure a PSSCH DMRS and/or a PSCCH DMRS, and determine the sidelink path loss based on the measurement result, so that flexibility of the solution can be improved. In addition, if the second signal type does not include the sidelink positioning reference signal, the second terminal device may not need to send the sidelink positioning reference signal to determine the sidelink path loss, so that a quantity of signals sent by the second terminal device can be reduced, and power consumption of the first terminal device can be reduced.

In another possible implementation, the second configuration information further includes: information indicating that the PSSCH DMRS belongs to the sidelink signal used to determine the sidelink path loss, or information indicating that the PSSCH DMRS does not belong to the sidelink signal used to determine the sidelink path loss; and/or information indicating that the PSCCH DMRS belongs to the sidelink signal used to determine the sidelink path loss, or information indicating that the PSCCH DMRS does not belong to the sidelink signal used to determine the sidelink path loss. In this way, flexibility of the solution can be improved.

The second terminal device may send the second configuration information to the first terminal device through a PC5 interface, or may send the second configuration information to the network device, so that the network device sends the second configuration information to the first terminal device. In another possible implementation, the second configuration information may alternatively be configured by the network device for the first terminal device. For example, the network device may send the second configuration information (for example, send the second configuration information by using an RRC message) to the first terminal device.

Because the first sidelink positioning reference signal and the sidelink signal used to determine the sidelink path loss may have different frequencies, in a possible implementation, the sidelink path loss may be determined based on a difference between frequencies of the first sidelink positioning reference signal and the sidelink signal. In this way, a more accurate sidelink path loss can be obtained. In a possible implementation, the first terminal device determines a quasi-sidelink path loss based on the first information; and the first terminal device determines the sidelink path loss based on the quasi-sidelink path loss and a first offset, where the first offset is determined based on a difference between a frequency of a sidelink signal associated with the quasi-sidelink path loss and a frequency of the first sidelink positioning reference signal. For example, the sidelink path loss is a sum of the sidelink path loss and the first offset. In this way, complexity of the

$$\Delta P_1 = 20 lg\left(\frac{f_n}{f}\right)$$

solution can be reduced. For another example, the first offset may be calculated by using a formula , where $\Delta P_1$ represents the first offset, $f_n$ is the frequency of the sidelink signal associated with the quasi-sidelink path loss, and $f$ is the frequency of the first sidelink positioning reference signal. It may be learned that the formula can accurately reflect the difference between the frequency of the sidelink signal associated based on the quasi-sidelink path loss and the frequency of the first sidelink positioning reference signal.

In another possible implementation, the first terminal device determines a fifth transmit power based on the second parameter and the sidelink path loss; and the first terminal device determines the second transmit power based on the fifth transmit power and a second offset, where the second offset is determined based on a difference between a frequency of the sidelink signal associated with the sidelink path loss and a frequency of the first sidelink positioning reference signal. It may be learned that in this solution, a process of determining the second transmit power may be adjusted by using the second offset, so that a more accurate second transmit power can be obtained, and then accuracy of the target transmit power can be improved. For example, the second transmit power is equal to a sum of the fifth transmit power and the second offset. In this way, complexity of the solution can be reduced.

$$\Delta P_2 = \alpha_{SL} \cdot 20 lg\left(\frac{f_n}{f}\right)$$

For example, the second offset $\Delta P_2$ may be calculated by using a formula , where $\alpha_{SL}$ represents a sidelink path loss adjustment value, $f_n$ is the frequency of the sidelink signal associated with the quasi-sidelink path loss, and $f$ is the frequency of the first sidelink positioning reference signal. It may be learned that the formula can accurately reflect the difference between the frequency of the sidelink signal associated based on the quasi-sidelink path loss and the frequency of the first sidelink positioning reference signal.

In a possible implementation, the power control parameter further includes a third transmit power. The third transmit power includes a transmit power of the first terminal device based on a CBR of a resource pool corresponding to the first sidelink positioning reference signal and a transmission priority corresponding to the first sidelink positioning reference signal. In this way, the first terminal device may determine the target transmit power based on the transmit power of the first terminal device in conditions of the CBR and the transmission priority, so that the determined target transmit power can better match an actual transmit power of the first terminal device. For example, the third transmit power may be carried in a sidelink resource pool (SL-resource Pool) message.

In a possible implementation, when the network device does not configure the third transmit power for the first terminal device, the third transmit power is equal to a fourth transmit power, and the fourth transmit power includes the transmit power of the first terminal device. In this way, the target transmit power can be determined based on the transmit power of the terminal device, so that the determined target transmit power better matches the transmit power of the terminal device.

In a possible implementation, the first terminal device determines the target transmit power based on the fourth transmit power and the power control parameter, where the fourth transmit power includes the transmit power of the first terminal device. In this way, the target transmit power can be determined based on the transmit power of the terminal device, so that the determined target transmit power better matches the transmit power of the terminal device.

In a possible implementation, the first terminal device determines the target transmit power based on a smaller value in one or more of a first value, the third transmit power, or the fourth transmit power, where the first value is a smaller value of the first transmit power and the second transmit power. For example, the first terminal device determines the target transmit power based on the first transmit power and/or the second transmit power. The first terminal device determines the target transmit power based on a smaller value of the first value, the third transmit power, and the fourth transmit power. In this way, the target transmit power can be reduced as much as possible, so that power consumption of the terminal device can be reduced.

To be more compatible with the conventional technology, and to determine the first transmit power more accurately, in a possible implementation, the first transmit power is obtained by using the following formula:

$$P_{PRS,D}(i) = P_{O_{PRS},D} + 10\log_{10}\left(2^{\mu} \cdot M_{RB}^{PRS}(i)\right) + \alpha_D \cdot PL_D$$

$P_{PRS,D}(i)$ represents the first transmit power, $P_{O_{PRS},D}$ represents the third parameter, $\mu$ represents a preset value, $M_{RB}^{PRS}(i)$ represents a quantity of resources occupied by the first sidelink positioning reference signal, $\alpha_D$ represents a downlink path loss adjustment value, $PL_D$ represents a downlink path loss, and min(a, b) represents a minimum value of a parameter a and a parameter b. The parameter a and the parameter b are used as an example herein to describe a meaning of min.

To be more compatible with the conventional technology, and to determine the first transmit power more accurately, in a possible implementation, the second transmit power is obtained by using the following formula:

$$P_{PRS,SL}(i) = P_{O_{PRS},SL} + 10\log_{10}\left(2^{\mu} \cdot M_{RB}^{PRS}(i)\right) + \alpha_{SL} \cdot PL_{SL}$$

$P_{PRS,SL}(i)$ represents the second transmit power, $P_{O_{PRS},SL}$ represents the fourth parameter, $\mu$ represents a preset value, $M_{RB}^{PRS}(i)$ represents a quantity of resources occupied by the first sidelink positioning reference signal, $\alpha_{SL}$ represents the sidelink path loss adjustment value, $PL_{SL}$ represents the sidelink path loss, and min(a, b) represents a minimum value of a parameter a and a parameter b. The parameter a and the parameter b are used as an example herein to describe a meaning of min, and dBm represents a decibel relative to one milliwatt.

In a possible implementation, before the first terminal device determines the target transmit power based on the power control parameter, the first terminal device sends a second sidelink positioning reference signal; the first terminal device receives a power feedback parameter from the second terminal device, where the power feedback parameter is determined based on a receive power of the second sidelink positioning reference signal and a receive power of a sidelink positioning reference signal that the second terminal device expects to receive; and the first terminal device determines the target transmit power based on the power control parameter and the power feedback parameter. In the solution provided in this embodiment of this application, the first terminal device may determine the target transmit power based on the power feedback parameter, so that a disadvantage of an open-loop power control mechanism can be compensated for, and the target transmit power can be better through feedback and adjustment.

In a possible implementation, the first terminal device adjusts the first transmit power based on the power feedback parameter, and the first terminal device determines the target transmit power based on an adjusted first transmit power. For example, the first terminal device may multiply the power feedback parameter by a preset coefficient and then add the power feedback parameter to the first transmit power, an obtained value is the adjusted first transmit power, and the preset coefficient may be equal to 1 or may not be equal to 1. Because the first terminal device may adjust the first transmit power based on the power feedback parameter, a value of the adjusted first transmit power may be increased, so that the target transmit power can be improved, and then a problem that the transmit power of the first sidelink positioning reference signal is insufficient can be alleviated. In another case, a value of the adjusted first transmit power may be decreased, so that the target transmit power can be reduced, power consumption of the first terminal device can be reduced, and interference between signals can also be reduced.

In another possible implementation, the first terminal device adjusts the second transmit power based on the power feedback parameter, and the first terminal device determines the target transmit power based on an adjusted second transmit power. For example, the first terminal device may multiply the power feedback parameter by a preset coefficient and then add the power feedback parameter to the second transmit power, an obtained value is the adjusted second transmit power, and the preset coefficient may be equal to 1 or may not be equal to 1. Because the first terminal device may adjust the second transmit power based on the power feedback parameter, a value of the adjusted second transmit power may be increased, so that the target transmit power can be improved, and then a problem that the transmit power of the first sidelink positioning reference signal is insufficient can be alleviated. In another case, a value of the adjusted second transmit power may be decreased, so that the target transmit power can be reduced, power consumption of the first terminal device can be reduced, and interference between signals can also be reduced.

In another possible implementation, the first terminal device determines a quasi-target transmit power based on the first transmit power and/or the second transmit power, and determines the target transmit power based on the quasi-target transmit power and the power feedback parameter. For example, the first terminal device may add the power feedback parameter to the quasi-target transmit power or multiply the power feedback parameter by the quasi-target transmit power, and another operation parameter may also be added in the operation process. The first terminal device may adjust the quasi-target transmit power based on the power feedback parameter, and then use an obtained value as the transmit power of the first sidelink positioning reference signal. In this solution, complexity of the solution can be reduced, and the target transmit power can be better.

In another possible implementation, the first terminal device adjusts a transmit power of the second sidelink positioning reference signal based on the power feedback parameter, to obtain the target transmit power, where the transmit power of the second sidelink positioning reference signal is determined based on the power control parameter. For example, the first terminal device may add the power feedback parameter to the transmit power of the second sidelink positioning reference signal or multiply the power feedback parameter by the transmit power of the second sidelink positioning reference signal, and another operation parameter may also be added in the operation process. The first terminal device may adjust the transmit power of the second sidelink positioning reference signal based on the power feedback parameter, and then use an obtained value as the transmit power of the first sidelink positioning reference signal. In this solution, complexity of the solution can be reduced, and the target transmit power can be better.

**According to a second aspect,** this application provides a first communication method. The method may be performed by a network device, or may be performed by a module, a unit, or a chip inside the network device. In this application, an example in which the method is performed by the network device is used for description. The method includes:

The network device determines a power control parameter, where the power control parameter has an association relationship with a resource pool of a sidelink positioning reference signal. The network device sends the power control parameter to a first terminal device, where the power control parameter is used by the first terminal device to determine a target transmit power for sending a first sidelink positioning reference signal.

The network device indicates the power control parameter to the terminal device, and the power control parameter has the association relationship with the resource pool of the sidelink positioning reference signal. Therefore, the first terminal device may determine a more appropriate transmit power of the sidelink positioning reference signal based on the power control parameter, so that not only quality of the sidelink positioning reference signal can be improved, thereby improving a success rate of sending the sidelink positioning reference signal, but also mutual interference between signals sent between terminal devices can be reduced as much as possible.

In a possible implementation, the power control parameter includes a first parameter and/or a second parameter. The first parameter includes a third parameter and/or a downlink path loss adjustment coefficient. The third parameter is an initial power control value based on a downlink path loss of the first terminal device. The second parameter includes a fourth parameter and/or a sidelink path loss adjustment coefficient, and the fourth parameter is an initial power control value based on a sidelink path loss of the first terminal device. For related descriptions and beneficial effect, refer to related content in the first aspect or the possible implementations of the first aspect. Details are not described again.

In a possible implementation, the first parameter and/or the second parameter are/is carried in a sidelink resource pool (SL-resource Pool) message. For related descriptions and beneficial effect, refer to related content in the first aspect or the possible implementations of the first aspect. Details are not described again.

In a possible implementation, the first parameter and/or the second parameter are/is carried in a sidelink power control (SL-power control) field in a sidelink resource pool (SL-resource Pool) message. For related descriptions and beneficial effect, refer to related content in the first aspect or the possible implementations of the first aspect. Details are not described again.

In a possible implementation, the network device sends first configuration information to a second terminal device, where the first configuration information indicates information about a sidelink signal used to determine the sidelink path loss; and the first configuration information includes at least one of the following content: information about a first signal type, a first resource identifier, or a first resource set identifier. For related descriptions and beneficial effect, refer to related content in the first aspect or the possible implementations of the first aspect. Details are not described again.

In a possible implementation, the first signal type includes a sidelink positioning reference signal, a PSSCH DMRS type, and/or a PSCCH DMRS type. For related descriptions and beneficial effect, refer to related content in the first aspect or the possible implementations of the first aspect. Details are not described again.

In a possible implementation, the first configuration information further includes: information indicating that a PSSCH DMRS belongs to the sidelink signal used to determine the sidelink path loss, or information indicating that a PSSCH DMRS does not belong to the sidelink signal used to determine the sidelink path loss; and/or information indicating that a PSCCH DMRS belongs to the sidelink signal used to determine the sidelink path loss, or information indicating that a PSCCH DMRS does not belong to the sidelink signal used to determine the sidelink path loss. For related descriptions and beneficial effect, refer to related content in the first aspect or the possible implementations of the first aspect. Details are not described again.

In a possible implementation, the first configuration information is carried in a PC5 RRC message. For related descriptions and beneficial effect, refer to related content in the first aspect or the possible implementations of the first aspect. Details are not described again.

In a possible implementation, the network device sends second configuration information to the first terminal device, where the second configuration information indicates information about a sidelink signal used to determine the sidelink path loss; and the second configuration information includes information about a second signal type, a second resource identifier, and a second resource set identifier. For related descriptions and beneficial effect, refer to related content in the first aspect or the possible implementations of the first aspect. Details are not described again. The second signal type is a type of the sidelink signal used to determine the sidelink path loss. The second signal type includes a sidelink positioning reference signal type. The second resource identifier includes a resource identifier of a third sidelink signal. The second resource set identifier includes a resource set identifier corresponding to a resource of the third sidelink signal.

In a possible implementation, the second signal type further includes a PSSCH DMRS type and/or a PSCCH DMRS type. For related descriptions and beneficial effect, refer to related content in the first aspect or the possible implementations of the first aspect. Details are not described again.

In a possible implementation, the second configuration information further includes: information indicating that a PSSCH DMRS belongs to the sidelink signal used to determine the sidelink path loss, or information indicating that a PSSCH DMRS does not belong to the sidelink signal used to determine the sidelink path loss; and/or information indicating that a PSCCH DMRS belongs to the sidelink signal used to determine the sidelink path loss, or information indicating that a PSCCH DMRS does not belong to the sidelink signal used to determine the sidelink path loss. For related descriptions and beneficial effect, refer to related content in the first aspect or the possible implementations of the first aspect. Details are not described again.

In a possible implementation, the second configuration information is carried in a PC5 RRC message. For related descriptions and beneficial effect, refer to related content in the first aspect or the possible implementations of the first aspect. Details are not described again.

In a possible implementation, the power control parameter further includes a third transmit power, and the third transmit power includes a transmit power of the network device based on a CBR of a resource pool corresponding to the first sidelink positioning reference signal and a transmission priority corresponding to the first sidelink positioning reference signal. For related descriptions and beneficial effect, refer to related content in the first aspect or the possible implementations of the first aspect. Details are not described again.

In a possible implementation, the third transmit power is carried in a sidelink resource pool SL-resource Pool message. For related descriptions and beneficial effect, refer to related content in the first aspect or the possible implementations of the first aspect. Details are not described again.

In a possible implementation, the power control parameter includes a fourth transmit power, and the fourth transmit power includes the transmit power of the network device. For related descriptions and beneficial effect, refer to related content in the first aspect or the possible implementations of the first aspect. Details are not described again.

**According to a third aspect,** this application provides a first communication method. The method may be performed by a second terminal device, or may be performed by a module, a unit, or a chip inside the second terminal device. In this application, an example in which the method is performed by the second terminal device is used for description. The method includes:

The second terminal device generates first information, where the first information includes information about a receive power of a sidelink signal or information about a sidelink path loss from a first terminal device, or information about a transmit power of a sidelink signal sent by the second terminal device. The second terminal device sends the first information to the first terminal device, where the first information is used by the first terminal device to determine the sidelink path loss.

In this solution, the sidelink path loss is determined based on information transmitted between the first terminal device and the second terminal device through a sidelink, so that accuracy of the sidelink path loss can be improved.

In a possible implementation, when the first information includes the information about the receive power of the sidelink signal from the first terminal device, the first information further includes a resource identifier of the sidelink signal from the first terminal device, or a resource set identifier corresponding to a resource of the sidelink signal from the first terminal device. For related descriptions and beneficial effect, refer to related content in the first aspect or the possible implementations of the first aspect. Details are not described again.

In a possible implementation, the first information includes one of the following content: information about a receive power of a first sidelink signal, where the first sidelink signal is a sidelink signal received by the second terminal device from the first terminal device, and a type of the first sidelink signal includes a sidelink positioning reference signal; information about a receive power of a second sidelink signal, where the second sidelink signal is a sidelink signal received by the second terminal device from the first terminal device, and a type of the second sidelink signal includes a PSSCH DMRS or a PSCCH DMRS; or information about the sidelink path loss, where the information about the sidelink path loss is determined based on a first sidelink signal or a second sidelink signal. For related descriptions and beneficial effect, refer to related content in the first aspect or the possible implementations of the first aspect. Details are not described again.

In a possible implementation, before the second terminal device generates the first information, the second terminal device receives first configuration information, where the first configuration information indicates information about a sidelink signal used to determine the sidelink path loss; and the first configuration information includes at least one of the following content: information about a first signal type, where the first signal type is a type of the sidelink signal used to determine the sidelink path loss, and the first signal type includes a sidelink positioning reference signal type; a first resource identifier, where the first resource identifier includes a resource identifier of the first sidelink signal; or a first resource set identifier, where the first resource set identifier includes a resource set identifier corresponding to a resource of the first sidelink signal. For related descriptions and beneficial effect, refer to related content in the first aspect or the possible implementations of the first aspect. Details are not described again.

In a possible implementation, the first signal type further includes a PSSCH DMRS type and/or a PSCCH DMRS type. For related descriptions and beneficial effect, refer to related content in the first aspect or the possible implementations of the first aspect. Details are not described again.

In a possible implementation, the first configuration information further includes: information indicating that a PSSCH DMRS belongs to the sidelink signal used to determine the sidelink path loss, or information indicating that a PSSCH DMRS does not belong to the sidelink signal used to determine the sidelink path loss; and/or information indicating that a PSCCH DMRS belongs to the sidelink signal used to determine the sidelink path loss, or information indicating that a PSCCH DMRS does not belong to the sidelink signal used to determine the sidelink path loss. For related descriptions and beneficial effect, refer to related content in the first aspect or the possible implementations of the first aspect. Details are not described again.

In a possible implementation, the first configuration information is carried in a PC5 RRC message. For related descriptions and beneficial effect, refer to related content in the first aspect or the possible implementations of the first aspect. Details are not described again.

In a possible implementation, the first information includes: information about a transmit power of a third sidelink signal, where the third sidelink signal is from the second terminal device, and a type of the third sidelink signal includes a sidelink positioning reference signal; and before the second terminal device generates the first information, the method further includes: the second terminal device sends the third sidelink signal. For related descriptions and beneficial effect, refer to related content in the first aspect or the possible implementations of the first aspect. Details are not described again.

In a possible implementation, the first information includes: information about a transmit power of a fourth sidelink signal, where the fourth sidelink signal is from the second terminal device, the third sidelink signal includes a sidelink positioning reference signal, and a type of the fourth sidelink signal includes a PSSCH DMRS or a PSCCH DMRS; and before the second terminal device generates the first information, the second terminal device sends the fourth sidelink signal. For related descriptions and beneficial effect, refer to related content in the first aspect or the possible implementations of the first aspect. Details are not described again.

In a possible implementation, the second terminal device sends second configuration information to the first terminal device, where the second configuration information indicates information about a sidelink signal used to determine the sidelink path loss; and the second configuration information includes at least one of the following content: information about a second signal type, where the second signal type is a type of the sidelink signal used to determine the sidelink path loss, and the second signal type includes a sidelink positioning reference signal type; a second resource identifier, where the second resource identifier includes a resource identifier of the third sidelink signal; or a second resource set identifier, where the second resource set identifier includes a resource set identifier corresponding to a resource of the third sidelink signal. For related descriptions and beneficial effect, refer to related content in the first aspect or the possible implementations of the first aspect. Details are not described again.

In a possible implementation, the second signal type further includes a PSSCH DMRS type and/or a PSCCH DMRS type. For related descriptions and beneficial effect, refer to related content in the first aspect or the possible implementations of the first aspect. Details are not described again.

In a possible implementation, the second configuration information further includes: information indicating that a PSSCH DMRS belongs to the sidelink signal used to determine the sidelink path loss, or information indicating that a PSSCH DMRS does not belong to the sidelink signal used to determine the sidelink path loss; and/or information indicating that a PSCCH DMRS belongs to the sidelink signal used to determine the sidelink path loss, or information indicating that a PSCCH DMRS does not belong to the sidelink signal used to determine the sidelink path loss. For related descriptions and beneficial effect, refer to related content in the first aspect or the possible implementations of the first aspect. Details are not described again.

In a possible implementation, the second configuration information is carried in a PC5 RRC message. For related descriptions and beneficial effect, refer to related content in the first aspect or the possible implementations of the first aspect. Details are not described again.

**According to a fourth aspect,** a communication apparatus is provided. The communication apparatus may be the first terminal device, the network device, or the second terminal device. The communication apparatus may include a communication unit and a processing unit, to perform any one of the implementations of any method in the first aspect to the third aspect. The communication unit is configured to perform sending and receiving related functions. Optionally, the communication unit includes a receiving unit and a sending unit. In a design, the communication apparatus is a communication chip, the processing unit may be one or more processors or processor cores, and the communication unit may be an input/output circuit or a port of the communication chip.

In another design, the communication unit may be a transmitter and a receiver, or the communication unit may be a transmitter machine and a receiver machine.

Optionally, the communication apparatus further includes modules that may be configured to perform any one of the implementations of any method in the first aspect to the third aspect.

**According to a fifth aspect,** a communication apparatus is provided. The communication apparatus may be the first terminal device, the network device, or the second terminal device, and the communication apparatus may include a processor and a memory. Optionally, the communication apparatus further includes a transceiver. The memory is configured to store a computer program or instructions. The processor is configured to invoke the computer program or the instructions from the memory and run the computer program or the instructions. When the processor executes the computer program or the instructions in the memory, the communication apparatus is enabled to perform any one of the implementations of any method in the first aspect to the third aspect.

Optionally, there are one or more processors, and there are one or more memories.

Optionally, the memory may be integrated with the processor, or the memory and the processor are disposed separately.

Optionally, the transceiver may include a transmitter machine (transmitter) and a receiver machine (receiver).

**According to a sixth aspect,** a communication apparatus is provided. The communication apparatus may be the first terminal device, the network device, or the second terminal device, and the communication apparatus may include a processor. The processor is coupled to a memory, and may be configured to perform the method according to any one of the first aspect to the third aspect and any one of the possible implementations of the first aspect to the third aspect. Optionally, the communication apparatus further includes the memory. Optionally, the communication apparatus further includes a communication interface, and the processor is coupled to the communication interface.

In an implementation, when the communication apparatus is a wireless communication device, the communication interface may be a transceiver or an input/output interface. Optionally, the transceiver may be a transceiver circuit. Optionally, the input/output interface may be an input/output circuit.

In another implementation, when the communication apparatus is a chip or a chip system, the communication interface may be an input/output interface, an interface circuit, an output circuit, an input circuit, a pin, a related circuit, or the like on the chip or the chip system. The processor may alternatively be embodied as a processing circuit or a logic circuit.

**According to a seventh aspect,** a system is provided. The system includes the first terminal device, the network device, and the second terminal device.

**According to an eighth aspect,** a computer program product is provided. The computer program product includes a computer program (which may also be referred to as code or instructions). When the computer program is run, a computer is enabled to perform the method according to any one of the possible implementations of the first aspect, or a computer is enabled to perform the method according to any one of the implementations of the first aspect to the third aspect.

**According to a ninth aspect,** a computer-readable storage medium is provided. The computer-readable medium stores a computer program (which may also be referred to as code or instructions). When the computer program is run on a computer, the computer is enabled to perform the method according to any one of the possible implementations of the first aspect, or the computer is enabled to perform the method according to any one of the implementations of the first aspect to the third aspect.

**According to a tenth aspect,** a chip system is provided. The chip system may include a processor. The processor is coupled to a memory, and may be configured to perform the method according to any one of the first aspect to the third aspect and any one of the possible implementations of any one of the first aspect to the third aspect. Optionally, the chip system further includes the memory. The memory is configured to store a computer program (which may also be referred to as code or instructions). The processor is configured to invoke the computer program from the memory and run the computer program, to enable a device on which the chip system is installed to perform the method according to any one of the first aspect to the third aspect and any one of the possible implementations of any one of the first aspect to the third aspect.

**According to an eleventh aspect,** a communication apparatus is provided. The communication apparatus may be the first terminal device or the second terminal device, and the communication apparatus may include an interface circuit and a processing circuit. The interface circuit may include an input circuit and an output circuit. The processing circuit is configured to receive a signal through the input circuit, and transmit a signal through the output circuit, so that the method according to any one of the first aspect to the third aspect and any one of the possible implementations of any one of the first aspect to the third aspect is implemented.

In a specific implementation process, the processing apparatus may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in this application.

In an implementation, when the communication apparatus is a wireless communication device, the wireless communication device may be a terminal, for example, a smartphone, or may be a radio access network device, for example, a base station. The interface circuit may be a radio frequency processing chip in the wireless communication device, and the processing circuit may be a baseband processing chip in the wireless communication device.

In another implementation, the communication apparatus may be some components in the wireless communication device, for example, an integrated circuit product, for example, a system chip or a communication chip. The interface circuit may be an input/output interface, an interface circuit, an output circuit, an input circuit, a pin, a related circuit, or the like on the chip or a chip system. The processing circuit may be a logic circuit on the chip.

BRIEF DESCRIPTION OF DRAWINGS

FIG. 1 is a diagram of several possible system architectures to which embodiments of this application are applicable;
FIG. 2 is a diagram of a possible network architecture to which an embodiment of this application is applicable;
FIG. 3 is a possible schematic flowchart of a communication method according to an embodiment of this application;
FIG. 4 is a possible schematic flowchart of a method for determining a sidelink path loss according to an embodiment of this application;
FIG. 5 is a possible schematic flowchart of a method for determining a sidelink path loss according to an embodiment of this application;
FIG. 6 is a possible schematic flowchart of another communication method according to an embodiment of this application;
FIG. 7 is a diagram of a structure of a possible communication apparatus according to an embodiment of this application;
FIG. 8 is a diagram of a structure of another possible communication apparatus according to an embodiment of this application; and
FIG. 9 is a diagram of a structure of another possible communication apparatus according to an embodiment of this application.

DESCRIPTION OF EMBODIMENTS

Technical solutions provided in embodiments of this application are mainly applicable to a wireless communication system. The wireless communication system may comply with a wireless communication standard of the 3rd generation partnership project (3rd generation partnership project, 3GPP). For example, the solutions provided in embodiments of this application may be applied to a 4th generation (4th generation, 4G) communication system, for example, a long term evolution (long term evolution, LTE) communication system, may be applied to a 5th generation (5th generation, 5G) communication system, for example, a 5G new radio (new radio, NR) communication system, or may be applied to various communication systems in the future, for example, a 6th generation (6th generation, 6G) communication system. Alternatively, the technical solutions provided in embodiments of this application may comply with another wireless communication standard, for example, a wireless communication standard of the institute of electrical and electronics engineers (Institute of Electrical and Electronics Engineers, IEEE) 802 series (for example, 802.11, 802.15, or 802.20).

The method provided in embodiments of this application may be further applied to a Bluetooth system, a Wi-Fi system, a LoRa system, or a vehicle to everything (vehicle to everything, V2X) system. The method provided in embodiments of this application may be further applied to a satellite communication system, and the satellite communication system may be integrated with the foregoing communication system.

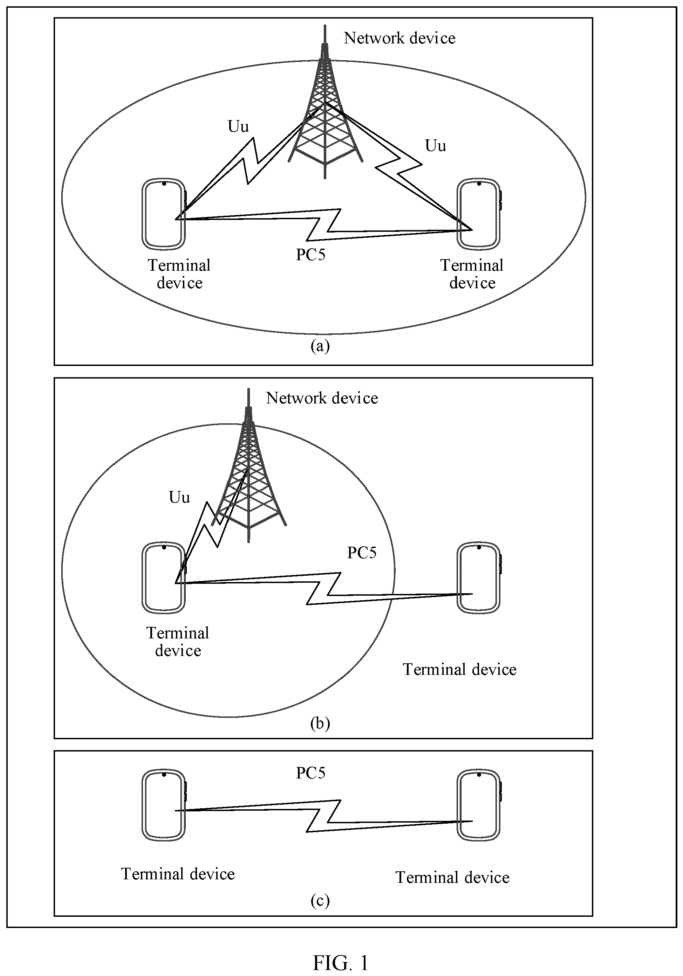

**FIG. 1** is an example of a diagram of several possible system architectures to which embodiments of this application are applicable. In FIG. 1, two terminal devices and one network device are used as an example for description. The communication system may further include more terminal devices and network devices.

**(a) in FIG. 1** shows an architecture within coverage of the network device. A PC5 connection is established between the terminal devices, and each terminal device establishes a connection to the network device (for example, a base station). It should be understood that the terminal devices may be connected to a same base station or may be connected to different base stations. In (a) in FIG. 1, an example in which the terminal devices are connected to a same base station is used for illustration. In embodiments of this application, a connection may be established between the terminal device and the base station through a Uu interface. A first terminal device and a second terminal device in the solutions provided in embodiments of this application may be the terminal devices within the coverage of the network device shown in (a) in FIG. 1.

**(b) in FIG. 1** shows an architecture within a part of coverage of the network device. A PC5 connection is established between the terminal devices, a part of the terminal devices do not establish connections to the network device (for example, a base station), and a remaining part of the terminal devices establish connections to the network device (for example, the base station). A part (for example, a first terminal device) of the first terminal device and a second terminal device in the solutions provided in embodiments of this application may be a terminal device within the coverage of the network device shown in (b) in FIG. 1, and the other part (for example, the second terminal device) of the first terminal device and the second terminal device may be a terminal device outside the coverage of the network device in (b) in FIG. 1.

**(c) in FIG. 1** shows an architecture outside coverage of the network device. A PC5 connection is established between the terminal devices, and all terminal devices do not establish a connection to the network device. A part or all of a first terminal device and a second terminal device in the solutions provided in embodiments of this application may be terminal devices outside the coverage of the network device shown in (c) in FIG. 1.

In the foregoing scenarios, because the first terminal device and the second terminal device are in a moving state, when moving to the coverage of the network device, the first terminal device and/or the second terminal device may communicate with the network device to transmit some information, parameters, and the like. In another possible implementation, for example, if the first terminal device does not move to the coverage of the network device within a period of time (where the first terminal device is located outside the coverage of the network device), the first terminal device may determine a transmit power of a first sidelink positioning reference signal based on Formula (1) provided in embodiments of this application subsequently. For example, a transmit power of the first terminal device (for example, a maximum transmit power of the first terminal device) may be determined as the transmit power of the first sidelink positioning reference signal. It may be learned that in the solutions provided in embodiments of this application, the first terminal device and/or the second terminal device may be located outside the coverage of the network device, or may be located within the coverage of the network device.

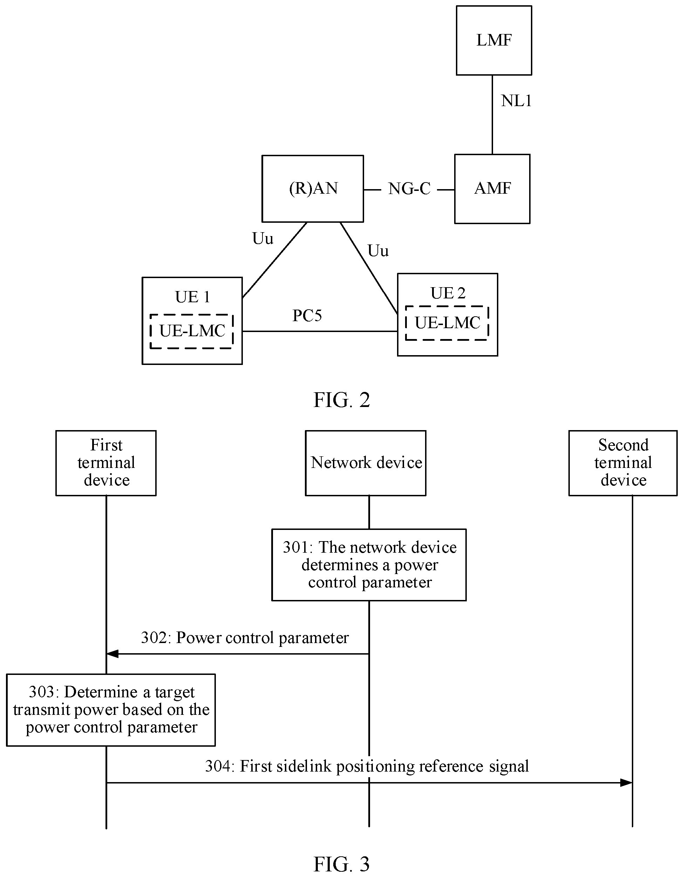

**FIG. 2** is an example of a diagram of a possible network architecture to which an embodiment of this application is applicable by using a 5G network architecture as an example. As shown in FIG. 2, a possible network architecture to which this application is applicable may include three parts: terminal devices (for example, UE 1 and UE 2 shown in FIG. 2), an access network device (for example, a next generation (next generation, NG) radio access network ((radio) access network, (R)AN) device), and a core network (core network).

(1) Terminal device

In this embodiment of this application, the terminal devices (for example, the UE 1 and the UE 2 shown in FIG. 2) may include user equipment (user equipment, UE)-location management components (location management components, LMCs). The UE-LMC may be a component or an application that is deployed on the terminal device and that has some LMF functions, and is configured to support a positioning service of a PC5 interface. An LMC in each terminal device in FIG. 2 is displayed as a dashed line, to indicate that the terminal device side may include an LMC, or may not include an LMC. In FIG. 2, an example in which the two terminal devices both include LMCs is used.

The terminal device (for example, the UE 1 or the UE 2 shown in FIG. 2) shown in FIG. 2 in this embodiment of this application may be the terminal device in the communication systems shown in FIG. 1. For example, the UE 1 and the UE 2 may be two terminal devices that are located within the coverage of the network device and that are shown in (a) in FIG. 1. For another example, a part of the terminal devices of the UE 1 and the UE 2 may be terminal devices that are located within the coverage of the network device and that are shown in (b) in FIG. 1, and the other part of the terminal devices of the UE 1 and the UE 2 may be terminal devices that are located outside the coverage of the network device and that are shown in (b) in FIG. 1. The UE 1 and the UE 2 may be two terminal devices that are located outside the coverage of the network device and that are shown in (c) in FIG. 1.

The terminal devices (for example, the UE 1 and the UE 2 shown in FIG. 2, and the first terminal device and the second terminal device in embodiments of this application) in embodiments of this application may include a device that provides voice and/or data connectivity for a user, for example, may include a handheld device with a wireless connection function or a processing device connected to a wireless modem. The terminal device may communicate with a core network through a radio access network (radio access network, RAN), and exchange a voice and/or data with the RAN. The terminal device may include user equipment (user equipment, UE), a wireless terminal device, a mobile terminal device, a device-to-device (device-to-device, D2D) terminal device, a vehicle to everything (vehicle to everything, V2X) terminal device. (where V2X may specifically include several application requirements such as vehicle-to-vehicle (vehicle-to-vehicle, V2V), vehicle-to-infrastructure (vehicle-to-infrastructure, V2I), vehicle-to-pedestrian (vehicle-to-pedestrian, V2P) direct communication, and vehicle-to-network (vehicle-to-network, V2N) communication and interaction), a machine-to-machine/machine-type communications (machine-to-machine/machine-type communications, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal device (remote terminal), an access terminal device (access terminal), a user terminal device (user terminal), a user agent (user agent), a user device (user device), or the like. For example, the terminal device may include a mobile phone (or referred to as a "cellular" phone), a computer having a mobile terminal device, a portable, pocket-sized, hand-held, or a computer-embedded mobile apparatus, or the like. For example, the terminal device may be a device such as a personal communication service (personal communication service, PCS) phone, a cordless telephone set, a session initiation protocol (session initiation protocol, SIP) phone, a wireless local loop (wireless local loop, WLL) station, or a personal digital assistant (personal digital assistant, PDA). Alternatively, the terminal device may be a tablet computer or a computer having a wireless transceiver function. Alternatively, the terminal device may be a virtual reality (virtual reality, VR) terminal device, an augmented reality (augmented reality, AR) terminal device, a wireless terminal in industrial control, a wireless terminal in self driving, a wireless terminal in telemedicine, a wireless terminal in a smart grid, a wireless terminal in a smart city (smart city), a wireless terminal in a smart home (smart home), or the like. The terminal device alternatively includes a limited device, for example, a device with low power consumption, a device with a limited storage capability, or a device with a limited computing capability. For example, the terminal device includes an information sensing device such as a barcode, radio frequency identification (radio frequency identification, RFID), a sensor, a global positioning system (global positioning system, GPS), or a laser scanner.

By way of an example and not a limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on the body or integrated into clothes or accessories of a user. The wearable device is not only a hardware device, but also implements a powerful function through software support, data exchange, and cloud interaction. In a broad sense, wearable intelligent devices include full-featured and large-sized devices that can implement all or some of functions without depending on smartphones, for example, smart watches or smart glasses, and include devices that focus only on a specific type of application function and need to collaboratively work with other devices such as smartphones, for example, various smart bands, smart helmets, or smart jewelry for monitoring physical signs.

If the various terminal devices described above are located in a vehicle (for example, placed in the vehicle or installed in the vehicle), the terminal devices may be all considered as vehicle-mounted terminal devices. For example, the vehicle-mounted terminal devices are also referred to as on-board units (on-board units, OBUs). The terminal device in embodiments of this application may alternatively be a vehicle-mounted module, an onboard component, a vehicle-mounted component, a vehicle-mounted chip, or a vehicle-mounted unit that is built in a vehicle as one or more components or units. The vehicle uses the vehicle-mounted module, the vehicle-mounted component, the vehicle-mounted component, the vehicle-mounted chip, or the vehicle-mounted unit that is built in the vehicle, to implement the method in this application.

In embodiments of this application, the terminal device may further include a relay (relay). Alternatively, it is understood that any device that can perform data communication with a base station may be considered as the terminal device.

The terminal device in embodiments of this application may be understood as a device, or may be a module configured to implement a function of the terminal device. The module may be disposed in the terminal device, or may be disposed independently of the terminal device. The module is, for example, a chip system.

**(2) Network device**

The network device may include an access network device and/or a core network device.

**(2.1)** Access network device

The access network (access network, AN) device (for example, a base station) may be a device that communicates with a wireless terminal device over an air interface in an access network through one or more cells. For example, the access network device may include an evolved NodeB (NodeB, eNB, e-NodeB, or evolved NodeB) in an LTE system or a long term evolution-advanced (long term evolution-advanced, LTE-A) system, may include a next generation NodeB (next generation NodeB, gNB) in a 5th generation mobile communication technology (5th generation, 5G) new radio (new radio, NR) system, or may include a central unit (central unit, CU) and a distributed unit (distributed unit, DU) that are in a cloud radio access network (cloud radio access network, Cloud RAN) system. This is not limited in embodiments of this application.

The eNB may include various forms of macro base stations, micro base stations (also referred to as small cells), relay stations, access points, wearable devices, and vehicle-mounted devices. The eNB may also be a transmission reception point (Transmission Reception Point, TRP).

The gNB may include various forms of macro base stations, micro base stations (also referred to as small cells), relay stations, access points, wearable devices, and vehicle-mounted devices. The gNB may also be a TRP or a transmission measurement function (Transmission measurement function, TMF). The gNB may include a CU and a DU that are integrated into the gNB.

The terminal device may communicate with a serving base station through a Uu link. For example, the terminal device may communicate with the Ng-eNB through an LTE-Uu link, or may communicate with the gNB through an NR-Uu link. The Ng-eNB is an LTE base station, and the gNB is an NR base station. Base stations may communicate with each other through an Xn interface.

(2.2) Core network device

Positioning-related network elements in the core network mainly include: an access and mobility management function (access and mobility management function, AMF) network element, a location management function (location management function, LMF) network element, and the like. The network elements may further include an evolved serving mobile location center (evolved server mobile location center, E-SMLC) network element, a unified data management (unified data management, UDM) network element, and an application function (application function, AF) network element. The base station may communicate with the AMF network element through an NG-C interface, and the AMF network element may be equivalent to a router for communication between the gNB and the LMF.

The LMF network element may estimate a location of the terminal device, and the AMF communicates with the LMF through an NLs interface.

The location management apparatus in embodiments of this application may be an LMF, a UE-LMC, or the like in FIG. 2, or may be a network element that has a function of the LMF or the UE-LMC in a future communication network such as a 6th generation (6th generation, 6G) network. This is not limited in this application.

**(3)** Transmission mode between terminal devices

For the transmission modes between the terminal devices, a current standard protocol supports a broadcast mode, a multicast mode, and a unicast mode.

Broadcast mode: The broadcast mode means that a terminal device serving as a transmit end sends data in a broadcast mode, and a plurality of terminal devices all can receive sidelink control information (sidelink control information, SCI) or a sidelink shared channel (sidelink shared channel, SSCH) from the transmit end.

On a sidelink, a manner of ensuring that all the terminal devices parse the control information from the transmit end is: The transmit end does not scramble the control information, or scrambles the control information by using a scrambling code known to all the terminal devices.

Multicast mode: The multicast mode is similar to the broadcast mode. A terminal device serving as a transmit end sends data in a broadcast mode. A group of terminal devices can parse SCI or an SSCH.

Unicast mode: In the unicast mode, a terminal device sends data to another terminal device, and the another terminal device does not need to or cannot parse the data.

**(4)** Sidelink (sidelink): The sidelink is a link between terminal devices. An uplink is a link between a terminal device and a network device.

During application, the network device may configure a resource pool for transmitted data and/or a transmitted signal. For example, the network device may configure a resource pool for a PSSCH of a first terminal device, and a resource in the resource pool is used by the first terminal device to send the PSSCH. For another example, the network device configures a resource pool for a sidelink positioning reference signal of the first terminal device, and a resource in the resource pool is used by the first terminal device to send the sidelink positioning reference signal.

Further, the network device may further configure a parameter for the resource pool. For example, the network device configures a parameter (where for example, the parameter used to perform power control on the PSSCH) for the resource pool of the PSSCH. When the first terminal device needs to perform power control on the sent PSSCH, the first terminal device may determine a transmit power of the PSSCH based on the parameter configured for the resource pool of the PSSCH, so that not only quality of the PSSCH can be improved, thereby improving a success rate of sending the PSSCH, but also mutual interference of PSSCHs sent between the terminal devices can be reduced as much as possible.

During actual application, resource pools configured by the network device may be different. For example, a resource pool configured by the network device for the PSSCH of the first terminal device may be different from a resource pool configured for the sidelink positioning reference signal of the first terminal device. One of the parameters configured by the network device for the resource pool of the PSSCH may be the same as or different from a parameter (for example, a power control parameter) configured by the network device for the resource pool of the sidelink positioning reference signal. There is no necessary relationship between the two parameters. If a transmit power of the sidelink positioning reference signal is still determined based on the parameter configured by the network device for the resource pool of the PSSCH, the transmit power of the sidelink positioning reference signal is not appropriately determined.

For the foregoing problem, this embodiment of this application provides a possible implementation. In this implementation, the network device sends, to the first terminal device, the power control parameter that has an association relationship with the resource pool of the sidelink positioning reference signal, and the first terminal device determines the sidelink positioning reference signal based on the power control parameter. In comparison with a manner in which a configuration parameter of another resource pool (for example, the resource pool of the PSSCH) is used to determine the sidelink positioning reference signal, in this manner, the transmit power of the sidelink positioning reference signal can be more appropriately determined, so that not only quality of the sidelink positioning reference signal can be improved, thereby improving a success rate of sending the sidelink positioning reference signal, but also mutual interference between signals sent between terminal devices can be reduced as much as possible. The following further describes the solutions provided in embodiments of this application with reference to the accompanying drawings.

Based on the embodiments shown in FIG. 1 and FIG. 2 and the foregoing other content, **FIG. 3** is an example of a possible schematic flowchart of a communication method according to an embodiment of this application. The method is illustrated by using an example in which execution bodies are a first terminal device, a second terminal device, and a network device. During actual application, a solution performed on a first terminal device side may also be performed by a unit, a module, or a chip inside the first terminal device, a solution performed on a second terminal device side may also be performed by a unit, a module, or a chip inside the second terminal device, and a solution performed on a network device side may also be performed by a unit, a module, or a chip inside the network device.

The first terminal device and the second terminal device in FIG. 3 may be the two terminal devices in the foregoing scenarios in FIG. 1. For example, the first terminal device and the second terminal device in this embodiment of this application may be the two terminal devices that are located within the coverage of the network device and that are shown in (a) in FIG. 1. For another example, in this embodiment of this application, either of the first terminal device and the second terminal device (for example, the first terminal device) may be one terminal device that is located within the coverage of the network device and that is shown in (b) in FIG. 1, and the other one of the first terminal device and the second terminal device (for example, the second terminal device) may be one terminal device that is located outside the coverage of the network device and that is shown in (b) in FIG. 1. The second terminal device does not establish a connection to the network device, and the first terminal device establishes a connection to the network device. For another example, the first terminal device and the second terminal device in this embodiment of this application may be the two terminal devices that are located outside the coverage of the network device and that are shown in (c) in FIG. 1. The first terminal device and the second terminal device in FIG. 3 may be the UE 1 and the UE 2 in FIG. 2.

The network device in FIG. 3 may be the network device shown in FIG. 1, or may be the network device in FIG. 2, for example, the access network device and/or the core network device shown in FIG. 2. This is not limited in this embodiment of this application.

As shown in **FIG. 3,** the method includes the following steps.

**Step 301:** The network device determines a power control parameter.

The power control parameter has an association relationship with a resource pool of a sidelink positioning reference signal.

The power control parameter is used by the first terminal device to determine a target transmit power for sending a first sidelink positioning reference signal.

**Step 302:** The network device sends the power control parameter to the first terminal device.

Correspondingly, the first terminal device receives the power control parameter from the network device.

**Step 303:** The first terminal device determines the target transmit power based on the power control parameter.

**Step 304:** The first terminal device sends the first sidelink positioning reference signal based on the target transmit power.

A sidelink positioning reference signal (for example, the first sidelink positioning reference signal or a second sidelink positioning reference signal) in this embodiment of this application may be understood as a signal that can be used for positioning and that is transmitted between terminal devices, or may be understood as a signal that is used for positioning and that is transmitted between sidelinks of terminal devices.

The sidelink positioning reference signal in this embodiment of this application may be a sidelink positioning reference signal (positioning reference signal, PRS), or may be a sounding reference signal (sounding reference signal, SRS), or may be a channel state information reference signal (channel state information reference signal, CSI-RS), a demodulation reference signal (demodulation reference signal, DMRS), a phase-tracking reference signal (phase-tracking reference signal, PTRS), or a sidelink synchronization signal/physical sidelink broadcast channel block (Sidelink Synchronization signal/physical sidelink broadcast channel block, S-SS/PSBCH block).

In this embodiment of this application, the network device configures a resource pool for a sidelink positioning reference signal of the first terminal device, and a resource in the resource pool is used by the first terminal device to send the sidelink positioning reference signal. The network device configures a parameter for the resource pool, where the power control parameter is a parameter in the parameter configured by the network device for the resource pool. The network device indicates the power control parameter to the terminal device, and the power control parameter has the association relationship with the resource pool of the sidelink positioning reference signal. Therefore, the first terminal device may determine a more appropriate transmit power of the sidelink positioning reference signal based on the power control parameter, so that not only quality of the sidelink positioning reference signal can be improved, thereby improving a success rate of sending the sidelink positioning reference signal, but also mutual interference between signals sent between terminal devices can be reduced as much as possible.

The power control parameter in this embodiment of this application may include one or more of a first parameter, a second parameter, and a third transmit power. The following provides separate descriptions.

**(1) First parameter**

The first parameter includes a third parameter and/or a downlink path loss adjustment coefficient.

The third parameter is an initial power control value based on a downlink path loss of the first terminal device. In a possible implementation, the third parameter may also be understood as an initial power control value of a transmit end of the first sidelink positioning reference signal based on the downlink path loss, and may also be understood as one receive power value that is of a sidelink positioning reference signal and that a receive end of the first sidelink positioning reference signal expects. The third parameter may be indicated by a parameter (where the parameter may have a plurality of names, for example, the parameter may be referred to as dl-P0-SLPRS) delivered by the network device.

The downlink path loss adjustment coefficient may be used to adjust the downlink path loss when a first transmit power is calculated based on the first parameter. The downlink path loss adjustment coefficient may be indicated by a parameter (where the parameter may have a plurality of names, for example, the parameter may be referred to as dl-Alpha-SLPRS) delivered by the network device. The downlink path loss adjustment coefficient may also be referred to as another name, for example, may be referred to as a filter parameter, a downlink path filter parameter, or the like. This is not limited in this embodiment of this application.

Because the first parameter includes the third parameter and/or the downlink path loss adjustment coefficient, the first terminal device may consider impact of the downlink path loss in a process of determining the target transmit power, so that the target transmit power can be more appropriately determined. In addition, the downlink path loss obtained through measurement may be adjusted based on the downlink path loss adjustment coefficient, so that the more appropriate target transmit power can be obtained.

The first parameter (for example, the third parameter and/or the downlink path loss adjustment coefficient) may be carried in a sidelink resource pool (SL-resource Pool) message. For example, the first parameter may be carried in a sidelink power control (SL-power control) field in the sidelink resource pool (SL-resource Pool) message. In this way, this is more compatible with the conventional technology. For example, the parameter dl-P0-SLPRS and/or the parameter dl-Alpha-SLPRS may be carried in the sidelink power control (SL-power control) field. The first terminal device may determine the third parameter based on the received parameter dl-P0-SLPRS. The first terminal device may determine the downlink path loss adjustment coefficient based on the received parameter dl-Alpha-SLPRS.

In a possible implementation, the network device does not configure the downlink path loss adjustment coefficient for the first terminal device. For example, the network device does not configure the downlink path loss adjustment coefficient for the resource pool of the sidelink positioning reference signal. For another example, the network device does not send the downlink path loss adjustment coefficient to the first terminal device (where the network device may configure or does not configure the downlink path loss adjustment coefficient for the resource pool of the sidelink positioning reference signal). For another example, the sidelink resource pool (SL-resource Pool) message sent by the network device to the first terminal device does not include the parameter dl-Alpha-SLPRS. For another example, the first terminal device cannot determine the downlink path loss adjustment coefficient from the parameter dl-Alpha-SLPRS sent by the network device. For example, the parameter dl-Alpha-SLPRS indicates one preset value. When the network device does not indicate the downlink path loss adjustment coefficient to the first terminal device, in a possible implementation, the first terminal device may determine that the downlink path loss adjustment coefficient is 1. In this way, when the network device does not configure the downlink path loss adjustment coefficient, the first terminal device may determine the target transmit power based on the downlink path loss obtained through measurement. In this way, the target transmit power can be determined based on maximum impact that may be caused by the downlink path loss, to avoid interference with uplink signal transmission, so that the target transmit power is more appropriate.

**(2) Second parameter**

The second parameter includes a fourth parameter and/or a sidelink path loss adjustment coefficient.

The fourth parameter is an initial power control value based on a sidelink path loss of the first terminal device. In a possible implementation, the fourth parameter may also be understood as an initial power control value of a transmit end of the first sidelink positioning reference signal based on the sidelink path loss, and may also be understood as another receive power value that is of a sidelink positioning reference signal and that a receive end of the first sidelink positioning reference signal expects. The fourth parameter is the receive power that is of the sidelink positioning reference signal and that the receive end of the first sidelink positioning reference signal expects. The fourth parameter may be indicated by a parameter (where the parameter may have a plurality of names, for example, the parameter may be referred to as sl-P0-SLPRS) delivered by the network device.

The sidelink path loss adjustment coefficient may be used to adjust the sidelink path loss when a second transmit power is calculated based on the second parameter. The sidelink path loss adjustment coefficient may be indicated by a parameter (where the parameter may have a plurality of names, for example, the parameter may be referred to as sl-Alpha-SLPRS) delivered by the network device. The sidelink path loss adjustment coefficient may also be referred to as another name, for example, may be referred to as a filter parameter, a sidelink path filter parameter, or the like. This is not limited in this embodiment of this application.

The second parameter (for example, the fourth parameter and/or the sidelink path loss adjustment coefficient) may be carried in a sidelink resource pool (SL-resource Pool) message. For example, the second parameter may be carried in a sidelink power control (SL-power control) field in the sidelink resource pool (SL-resource Pool) message. In this way, this is more compatible with the conventional technology. For example, the parameter sl-P0-SLPRS and/or the parameter sl-Alpha-SLPRS may be carried in the sidelink power control (SL-power control) field. The first terminal device may determine the fourth parameter based on the received parameter sl-P0-SLPRS. The first terminal device may determine the sidelink path loss adjustment coefficient based on the received parameter sl-Alpha-SLPRS.

Because the first parameter includes the fourth parameter and/or the sidelink path loss adjustment coefficient, in a process of determining the transmit power of the sidelink positioning reference signal, the first terminal device may consider impact of the sidelink path loss, so that the transmit power of the sidelink positioning reference signal can be more appropriately determined. In addition, the sidelink path loss obtained through measurement may be adjusted based on the sidelink path loss adjustment coefficient, so that the more appropriate transmit power of the sidelink positioning reference signal can be obtained, and interference between the terminal devices can be reduced.

In a possible implementation, the network device does not configure the sidelink path loss adjustment coefficient for the first terminal device. For example, the network device does not configure the sidelink path loss adjustment coefficient for the resource pool of the sidelink positioning reference signal. For another example, the network device does not send the sidelink path loss adjustment coefficient to the first terminal device (where the network device may configure or does not configure the sidelink path loss adjustment coefficient for the resource pool of the sidelink positioning reference signal). For another example, the sidelink resource pool (SL-resource Pool) message sent by the network device to the first terminal device does not include the parameter sl-Alpha-SLPRS. For another example, the first terminal device cannot determine the sidelink path loss adjustment coefficient from the parameter sl-Alpha-SLPRS sent by the network device. For example, the parameter sl-Alpha-SLPRS indicates one preset value. When the network device does not indicate the sidelink path loss adjustment coefficient to the first terminal device, in a possible implementation, the first terminal device may determine that the sidelink path loss adjustment coefficient is 1. In this way, when the network device does not configure the sidelink path loss adjustment coefficient, the first terminal device may determine the target transmit power based on the sidelink path loss obtained through measurement. In this way, the target transmit power can be determined based on maximum impact that may be caused by the sidelink path loss, so that the target transmit power is more appropriate.

**(3) Third transmit power**

The third transmit power includes a transmit power of the first terminal device based on a CBR of a resource pool corresponding to the first sidelink positioning reference signal and a transmission priority corresponding to the first sidelink positioning reference signal. In this way, the first terminal device may determine the target transmit power based on the transmit power of the first terminal device in conditions of the CBR and the transmission priority, so that the determined target transmit power can better match an actual transmit power of the first terminal device.

For example, the third power may be a maximum transmit power of the first terminal device based on the CBR of the resource pool corresponding to the first sidelink positioning reference signal and the transmission priority corresponding to the first sidelink positioning reference signal. The third transmit power may be indicated by a parameter (where the parameter may have a plurality of names, for example, the parameter may be referred to as sl-MaxTxPower-SLPRS) delivered by the network device.

The third transmit power may be carried in a sidelink resource pool (SL-resource Pool) message. For example, the parameter sl-MaxTxPower-SLPRS may be carried in the sidelink resource pool (SL-resource Pool) message. The first terminal device may determine the third transmit power based on the received parameter sl-MaxTxPower-SLPRS.

In a possible implementation, the network device does not configure the third transmit power for the first terminal device. For example, the network device does not configure the third transmit power for the resource pool of the sidelink positioning reference signal. For another example, the network device does not send the third transmit power to the first terminal device (where the network device may configure or does not configure the third transmit power for the resource pool of the sidelink positioning reference signal). For another example, the sidelink resource pool (SL-resource Pool) message sent by the network device to the first terminal device does not include the parameter sl-MaxTxPower-SLPRS. For another example, the first terminal device cannot determine the third transmit power from the parameter sl-MaxTx-Power-SLPRS sent by the network device. For example, the parameter sl-MaxTxPower-SLPRS indicates one preset value.

When the network device does not indicate the third transmit power to the first terminal device, in a possible implementation, the first terminal device may not consider the third transmit power when determining the target transmit power. In another possible implementation, the first terminal device may determine that the third transmit power is equal to a fourth transmit power. The fourth transmit power includes a transmit power of the first terminal device. For example, the fourth transmit power includes a maximum transmit power of the first terminal device. In this way, the target transmit power can be determined based on the transmit power of the terminal device, so that the determined target transmit power better matches the transmit power of the terminal device. In this embodiment of this application, the fourth transmit power may be configured on the first terminal device. The first terminal device may learn of the fourth transmit power from configuration information of the first terminal device. Alternatively, the fourth transmit power may be indicated by another device (for example, the network device) to the first terminal device.

In step 303, the first terminal device determines the target transmit power based on the power control parameter. Specifically, for example, the first terminal device may determine the target transmit power based on one or more of the first transmit power, the second transmit power, the third transmit power, and the fourth transmit power.

The first transmit power is determined based on the first parameter and the downlink path loss. In this way, in a process of determining the target transmit power, the first terminal device may consider impact caused by a downlink path, so that a more appropriate target transmit power can be determined, thereby avoiding impact on uplink signal transmission. For another example, the first transmit power is determined based on the first parameter, the downlink path loss, and a quantity of resources occupied by the first sidelink positioning reference signal. In this way, the target transmit power may be determined with reference to the quantity of resources occupied by the first sidelink positioning reference signal, so that a result can be more appropriate.

The second transmit power is determined based on the second parameter and the sidelink path loss. In this way, in a process of determining the target transmit power, the first terminal device may consider impact caused by a sidelink path, so that a more appropriate target transmit power can be determined, thereby avoiding interference between the terminal devices. For another example, the second transmit power is determined based on the second parameter, the sidelink path loss, and a quantity of resources occupied by the first sidelink positioning reference signal. In this way, the target transmit power may be determined with reference to the quantity of resources occupied by the first sidelink positioning reference signal, so that a result can be more appropriate.

The fourth transmit power includes a transmit power of the first terminal device, for example, may be a maximum transmit power of the first terminal device. In this way, the target transmit power can be determined based on the transmit power of the terminal device, so that the determined target transmit power better matches the transmit power of the terminal device.

In a possible implementation, the first terminal device determines the target transmit power based on a smaller value in one or more of a first value, the third transmit power, or the fourth transmit power. For example, the first terminal device determines the target transmit power based on a smaller value of the first value, the third transmit power, and the fourth transmit power. For example, the first terminal device may determine a minimum value of the first transmit power, the second transmit power, the third transmit power, and the fourth transmit power as the target transmit power, where the first value is a smaller value of the first transmit power and the second transmit power.

The target transmit power is obtained by using the following formula:

$$P_{PRS}(i) = min\,(P_{CMAX}, P_{MAX,CBR}, min\,(P_{PRS,D}(i), P_{PRS,SL}(i)))[dBm] \qquad \text{Formula (1)}$$

In Formula (1), $P_{PRS}(i)$ represents the target transmit power, $P_{CMAX}$ represents the fourth transmit power, $P_{MAX,CBR}$ represents the third transmit power, $P_{PRS,D}(i)$ represents the first transmit power, $P_{PRS,SL}(i)$ represents the second transmit power, and min(a, b) represents a minimum value of a parameter a and a parameter b. The parameter a and the parameter b are used as an example herein to describe a meaning of min, and dBm represents a decibel relative to one milliwatt (decibel relative to one milliwatt, dBm). In Formula (1), $P_{PRS}(i)$ may also be understood as a transmit power of an SL bandwidth part (bandwidth part, BWP) b of a carrier *f* on a sending occasion i.

In addition to the foregoing example, the first terminal device may alternatively determine the target transmit power in another manner. For example, the first terminal device may determine a minimum value in one or more of the first transmit power, the second transmit power, the third transmit power, and the fourth transmit power as the target transmit power. For example, the first terminal device determines a smaller value of the first transmit power and the second transmit power as the target transmit power. In this way, the target transmit power can be reduced as much as possible, and power consumption of the terminal device can be reduced. For another example, the first terminal device may determine a minimum value of the first transmit power, the second transmit power, and the first value as the target transmit power, and the first value is a minimum value or a maximum value of the third transmit power and the fourth transmit power. For example, a distance between the first terminal device and the network device is long, but a distance between the first terminal device and the second terminal device is short. Therefore, the sidelink path loss may be large, and the fourth transmit power may be large. If the first value is selected as the maximum value of the third transmit power and the fourth transmit power, that is, the first value is the fourth transmit power, the first terminal device may further determine the target transmit power based on the fourth transmit power, so that a requirement for communication between the terminal devices as much as possible.

The following separately further describes the first transmit power and the second transmit power.

**(1) First transmit power**

The first transmit power is determined based on the first parameter, the downlink path loss, and the quantity of resources occupied by the first sidelink positioning reference signal.

The first transmit power is obtained by using the following formula:

$$P_{PRS,D}(i) = P_{0_{PRS},D} + 10\log_{10}\left(2^{\mu} \cdot M_{RB}^{PRS}(i)\right) + \alpha_{D} \cdot PL_{D}\ [dBm] \qquad \text{Formula (2)}$$

In Formula (2), $P_{PRS,D}(i)$ represents the first transmit power, $P_{0_{PRS},D}$ represents the third parameter, $\mu$ represents a preset value, $M_{RB}^{PRS}(i)$ represents the quantity of resources occupied by the first sidelink positioning reference signal, $\alpha_{D}$ represents the downlink path loss adjustment value, $PL_{D}$ represents the downlink path loss, and min(a, b) represents a minimum value of a parameter a and a parameter b. The parameter a and the parameter b are used as an example herein to describe a meaning of min, and dBm represents a decibel relative to one milliwatt.

In a possible implementation, the network device does not configure the third parameter. For example, the network device does not configure the third parameter for the resource pool of the sidelink positioning reference signal. For another example, the network device does not send the third parameter to the first terminal device (where the network device may configure or does not configure the third parameter for the resource pool of the sidelink positioning reference signal). For another example, the sidelink resource pool (SL-resource Pool) message sent by the network device to the first terminal device does not include the parameter dl-P0-SLPRS. For another example, the first terminal device cannot determine the third parameter from the parameter dl-P0-SLPRS sent by the network device. For example, the parameter dl-P0-SLPRS indicates one preset value.

In a possible implementation, when the network device does not configure the third parameter, in a possible implementation, the first transmit power includes a smaller value of the third transmit power and the fourth transmit power, and may be represented by using a formula $P_{PRS,D}(i) = min(P_{CMAX}, P_{MAX,CBR})[dBm]$. For meanings of parameters in the formula, refer to content of Formula (1) and Formula (2) above. Details are not described again. In this way, when the network device does not configure the third parameter, the first terminal device may determine the target transmit power based on a capability of the terminal device and a capability of the terminal device in conditions of the CBR and the transmission priority, so that the determined target transmit power can better match an actual capability of the first terminal device. In another possible implementation, when determining the target transmit power, the first terminal device may not consider the first transmit power.

In this embodiment of this application, the first transmit power may alternatively be determined in another manner. For example, the first transmit power is a sum of the first parameter and the downlink path loss. For another example, the first transmit power is determined by using the first parameter and the quantity of resources occupied by the first sidelink positioning reference signal.

**(1.1) Downlink path loss**

The first terminal device may estimate the downlink path loss based on a downlink signal. For example, $PL_D=PL_{b,f,c}(q_d)$ in Formula 1, to be specific, the first terminal device may estimate the downlink path loss by using a reference signal of a reference signal resource index $q_d$. Specifically, the downlink path loss may be obtained by subtracting a measured RSRP from a transmit power of the reference signal whose reference signal index is $q_d$, and the transmit power may be obtained from the network device.

**(2) Second transmit power**

The second transmit power is determined based on the second parameter, the sidelink path loss, and the quantity of resources occupied by the first sidelink positioning reference signal.
The second transmit power is obtained by using the following formula:

$$P_{PRS,SL}(i) = P_{O_{PRS},SL} + 10\log_{10}\left(2^\mu \cdot M_{RB}^{PRS}(i)\right) + \alpha_{SL} \cdot PL_{SL}[dBm] \qquad \text{Formula (3)}$$

In Formula (3), $P_{PRS,SL}(i)$ represents the second transmit power, $P_{O_{PRS},SL}$ represents the fourth parameter, $\mu$ represents a preset value, $M_{RB}^{PRS}(i)$ represents the quantity of resources occupied by the first sidelink positioning reference signal, $\alpha_{SL}$ represents the sidelink path loss adjustment value, $PL_{SL}$ represents the sidelink path loss, and min(a, b) represents a minimum value of a parameter a and a parameter b. The parameter a and the parameter b are used as an example herein to describe a meaning of min, and dBm represents a decibel relative to one milliwatt.
In a possible implementation, the network device does not configure the fourth parameter. For example, the network device does not configure the fourth parameter for the resource pool of the sidelink positioning reference signal. For another example, the network device does not send the fourth parameter to the first terminal device (where the network device may configure or does not configure the fourth parameter for the resource pool of the sidelink positioning reference signal). For another example, the sidelink resource pool (SL-resource Pool) message sent by the network device to the first terminal device does not include the parameter sl-P0-SLPRS. For another example, the first terminal device cannot determine the fourth parameter from the parameter sl-P0-SLPRS sent by the network device. For example, the parameter sl-P0-SLPRS indicates one preset value.
In a possible implementation, when the network device does not configure the fourth parameter, in a possible implementation, the second transmit power includes a smaller value of the third transmit power and the fourth transmit power, and may be represented by using a formula $P_{PRS,SL}(i) = min(P_{CMAX}, P_{MAX,CBR})[dBm]$. For meanings of parameters in the formula, refer to content of Formula (1), Formula (2), and Formula (3) above. Details are not described again. In this way, when the network device does not configure the fourth parameter, the first terminal device may determine the target transmit power based on a capability of the terminal device and a capability of the terminal device in conditions of the CBR and the transmission priority, so that the determined target transmit power can better match an actual capability of the first terminal device. In another possible implementation, when determining the target transmit power, the first terminal device may not consider the second transmit power.
In this embodiment of this application, the second transmit power may alternatively be determined in another manner. For example, the second transmit power is a sum of the second parameter and the sidelink path loss. For another example, the second transmit power is determined by using the second parameter and the quantity of resources occupied by the first sidelink positioning reference signal.

**(2.1) Sidelink path loss**

In a possible implementation, the second terminal device generates first information, and the second terminal device sends the first information to the first terminal device. The first information includes information about a receive power of a sidelink signal or information about the sidelink path loss from the first terminal device, or information about a transmit power of a sidelink signal sent by the second terminal device. The first terminal device receives the first information from the second terminal device. The first terminal device determines the sidelink path loss based on the first information. The first terminal device determines the sidelink path loss in a large quantity of manners, so that flexibility of the solution can be improved. In addition, the sidelink path loss is determined based on information transmitted between the first terminal device and the second terminal device through a sidelink, so that accuracy of the sidelink path loss can be improved. The sidelink signal in this embodiment of this application may be a sidelink PRS, or may be an SRS, or may be a CSI-RS, a DMRS, a PTRS, or an S-SS/PSBCH block.

There are a plurality of manners of transmitting the first information between the second terminal device and the first terminal device. For example, the second terminal device may send the first information to the first terminal device through a PC5 interface, where for example, the first information is carried in a PC5 RRC message. For another example, the second terminal device and the first terminal device transmit the first information through a device such as another terminal device or the network device. For example, the second terminal device may send the first information to the network device (where for example, the first terminal device sends the first information through a Uu interface between the first terminal device and the network device). After receiving the first information, the network device forwards the first information to the second terminal device.

In another possible implementation, when the first information includes the information about the receive power of the sidelink signal from the first terminal device, the second terminal device may further send, to the first terminal device, a resource (resource) identifier (identifier, ID) of the sidelink signal from the first terminal device and/or a resource set identifier (resource set ID) corresponding to a resource of the sidelink signal from the first terminal device. A part or all of the two pieces of information may be included in the first information, or may not be included in the first information. Subsequently, the part of content is described by using an example in which the two pieces of information are included in the first information. In this way, the first terminal device may determine the sidelink signal corresponding to the receive power included in the first information, and then determine the sidelink path loss based on a transmit power of the sidelink signal and the receive power in the first information. One resource set identifier corresponds to one resource set, and one resource set includes one or more resources.

The following describes two possible manners by using Manner 1 and Manner 2. In Manner 1, the first information includes the information about the receive power of the sidelink signal or the information about the sidelink path loss from the first terminal device. In Manner 2, the first information includes the information about the transmit power of the sidelink signal sent by the second terminal device.

**Manner 1:** The first information includes the information about the receive power of the sidelink signal or the information about the sidelink path loss from the first terminal device.

For example, the first information includes at least one of the following content: information about a receive power of a first sidelink signal, where the first sidelink signal is a sidelink signal received by the second terminal device from the first terminal device, and a type of the first sidelink signal includes a sidelink positioning reference signal; information about a receive power of a second sidelink signal, where the second sidelink signal is a sidelink signal received by the second terminal device from the first terminal device, and a type of the second sidelink signal includes a PSSCH DMRS or a PSCCH DMRS; or information about the sidelink path loss, where the information about the sidelink path loss is determined based on a first sidelink signal or a second sidelink signal. The sidelink path loss may be determined between the first terminal device and the second terminal device based on the sidelink positioning reference signal, the PSSCH DMRS, or the PSCCH DMRS, so that flexibility of the solution can be improved.

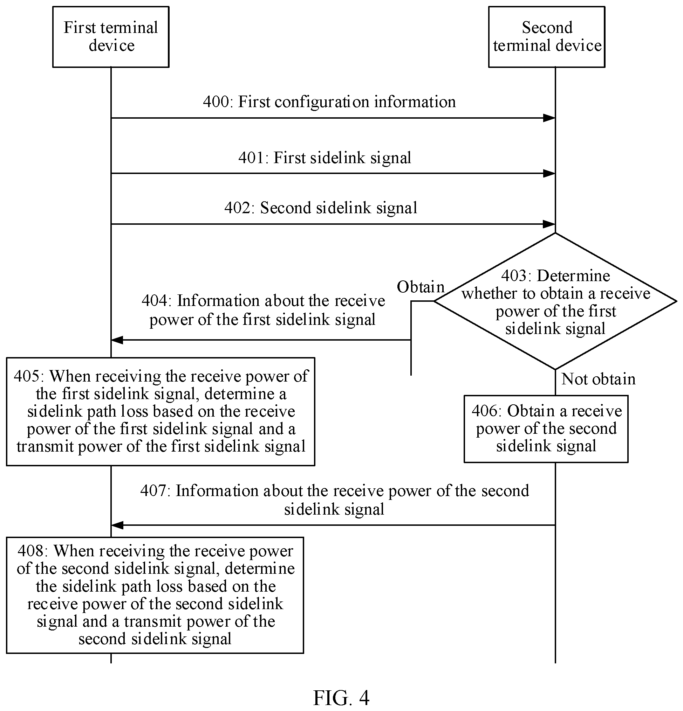

**FIG. 4** is an example of a possible schematic flowchart of a method for determining a sidelink path loss according to an embodiment of this application. As shown in FIG. 4, the method includes the following steps.

**Step 400:** A first terminal device sends first configuration information to a second terminal device.

Correspondingly, the second terminal device receives the first configuration information.

The first configuration information indicates information about a sidelink signal used to determine the sidelink path loss. In this way, the second terminal device may perform measurement based on the sidelink signal configured by using the first configuration information, so that a process of determining the sidelink path loss can be better managed and controlled.

In step 400, the first terminal device may send the first configuration information to the second terminal device through a PC5 interface, or may send the first configuration information to a network device, so that the network device sends the first configuration information to the second terminal device. In another possible implementation, the first configuration information may alternatively be configured by the network device for the second terminal device. For example, the network device may send the first configuration information to the second terminal device (for example, send the first configuration information by using an RRC message). In FIG. 4, an example in which the first terminal device sends the first configuration information to the second terminal device is used for illustration

The first configuration information may include one or more of information about a first signal type, a first resource identifier, or a first resource set identifier. It may be learned that there are a plurality of manners of configuring the sidelink signal by using the first configuration information, and the manners are flexible, so that flexibility of the solution can be improved. The first signal type is a type of the sidelink signal used to determine the sidelink path loss. The first signal type may include one or more of a sidelink positioning reference signal, a PSSCH DMRS, or a PSCCH DMRS. If the first signal type includes the sidelink positioning reference signal, because a determined target transmit power is a transmit power of a first sidelink positioning reference signal, the sidelink path loss determined based on the sidelink positioning reference signal can more accurately reflect an environment faced by the first sidelink positioning reference signal, and then accuracy of the target transmit power can be improved. If the first signal type includes the PSSCH DMRS and/or the PSCCH DMRS, the second terminal device may further measure the PSSCH DMRS and/or the PSCCH DMRS, and feed back the first information based on a measurement result, so that flexibility of the solution can be improved. If the first signal type does not include the sidelink positioning reference signal, the first terminal device may not need to send the sidelink positioning reference signal to determine the sidelink path loss, so that a quantity of signals sent by the first terminal device can be reduced, and power consumption of the first terminal device can be reduced.

The first resource identifier may include an identifier of one or more resources. The first resource set identifier may also include an identifier of one or more resource sets.

After receiving the first configuration information, the second terminal device may determine, based on the first configuration information, the sidelink signal whose receive power needs to be measured. For example, the first signal type includes the sidelink positioning reference signal, and the second terminal device may measure the received sidelink positioning reference signal. For another example, the first configuration information includes the first resource identifier. The second terminal device may measure the received sidelink signal on a resource in the one or more resources indicated by the first resource identifier, and feed back the first information based on one or more receive powers obtained through measurement. For example, the first information may include a maximum value, an average value, a larger value, or the like of the one or more receive powers obtained through measurement by the second terminal device. For another example, the first configuration information includes the first resource set identifier. The second terminal device may measure the received sidelink signal on a resource in the one or more resources indicated by the first resource set identifier, and feed back the first information based on one or more receive powers obtained through measurement. For example, the first information may include a maximum value, an average value, a larger value, or the like of the one or more receive powers.

Step 400 may be an optional step, and the second terminal device may not receive the first configuration information. In this case, in a possible implementation, the second terminal device may measure the received sidelink positioning reference signal on a resource of the sidelink positioning reference signal, and feed back the first information based on one or more receive powers obtained through measurement. For example, the first information may include a maximum value, an average value, a larger value, or the like of the one or more receive powers.

**Step 401:** The first terminal device sends a first sidelink signal.

The second terminal device may receive the first sidelink signal. A type of the first sidelink signal includes a sidelink positioning reference signal.

**Step 402:** The first terminal device sends a second sidelink signal.

The second terminal device may receive the second sidelink signal. A type of the second sidelink signal includes a PSSCH DMRS or a PSCCH DMRS.

There is no sequence between step 401 and step 402, and step 402 may be performed before step 401.

**Step 403:** The second terminal device determines whether to obtain a receive power of the first sidelink signal.

When the second terminal device obtains the receive power of the first sidelink signal, step 404 is performed.

When the second terminal device does not obtain the receive power of the first sidelink signal, step 406 is performed.

In this embodiment of this application, an example in which the first sidelink signal is a sidelink positioning reference signal and the second sidelink signal is not a sidelink positioning reference signal (for example, a PSSCH DMRS or a PSCCH DMRS) is used for description. In this embodiment of this application, the receive power that is of the first sidelink signal and that is fed back by the second terminal device may be understood as a transmit power of the sidelink positioning reference signal.

In a possible implementation, before step 403, the second terminal device may receive the first configuration information. For example, the first signal type includes the type of the first sidelink signal. After receiving the first configuration information, the second terminal device measures the received sidelink positioning reference signal, and the second terminal device may feed back the receive power of the first sidelink signal based on an obtained receive power of one or more sidelink signals. For example, a maximum value, a larger value, or an average value of the receive power of the one or more sidelink signals is used as the receive power of the first sidelink signal. For another example, the first resource identifier includes a resource identifier of the first sidelink signal. For another example, the first resource set identifier may include a resource set identifier of a resource of the first sidelink signal. Similarly, the second terminal device may perform measurement based on the first resource identifier and/or the first resource set identifier that are/is included in the first configuration information, and feed back the receive power of the first sidelink signal based on the obtained receive power of the one or more sidelink signals. For example, the maximum value, the larger value, or the average value of the receive power of the one or more sidelink signals is used as the receive power of the first sidelink signal. For related content, refer to related descriptions of step 400. Details are not described again.

In step 403, the second terminal device may not obtain the receive power of the first sidelink signal. For example, the second terminal device may not successfully receive the first sidelink signal. Alternatively, the second terminal successfully receives the first sidelink signal, but cannot measure the receive power of the first sidelink signal, or fails to measure the first sidelink signal or encounters a measurement error. When the second terminal device does not obtain the receive power of the first sidelink signal, for the second terminal device, there may be a plurality of implementations. For example, as shown in FIG. 4, when the second terminal device does not obtain the receive power of the first sidelink signal (for example, the sidelink positioning reference signal), the second terminal device may measure the second sidelink signal (for example, the PSSCH DMRS or the PSCCH DMRS), and feed back an obtained receive power of the second sidelink signal to the first terminal device. This example is used for illustration in FIG. 4.

In the implementation shown in FIG. 4, the first signal type in the first configuration information may include the type of the second sidelink signal. For example, the first signal type may include the PSSCH DMRS and/or the PSCCH DMRS. In this way, when the second terminal device does not obtain the receive power of the first sidelink signal, the second terminal device may measure the PSSCH DMRS and/or the PSCCH DMRS (for example, the second sidelink signal), and include an obtained measurement result (for example, the receive power) in the first information.

In another possible implementation, the first signal type in the first configuration information may not include the type of the second sidelink signal. In this way, when the second terminal device does not obtain the receive power of the first sidelink signal, the second terminal device may measure the PSSCH DMRS and/or the PSCCH DMRS (for example, the second sidelink signal) according to a preset rule or a default rule, and include an obtained measurement result (for example, the receive power) in the first information.

In another possible implementation, the first configuration information may include information indicating that the PSSCH DMRS belongs to the sidelink signal used to determine the sidelink path loss, or information indicating that the PSSCH DMRS does not belong to the sidelink signal used to determine the sidelink path loss. The first configuration information may also include information indicating that the PSCCH DMRS belongs to the sidelink signal used to determine the sidelink path loss, or information indicating that the PSCCH DMRS does not belong to the sidelink signal used to determine the sidelink path loss. In this way, when the second terminal device does not obtain the receive power of the first sidelink signal, the second terminal device may measure the PSSCH DMRS and/or the PSCCH DMRS (for example, the second sidelink signal) according to a preset rule or a default rule, and include an obtained measurement result (for example, the receive power) in the first information.

For example, a special bit may be set in a field of the first configuration information. If a bit value of the bit is 1, it may indicate that the PSSCH DMRS belongs to the sidelink signal used to determine the sidelink path loss. If the bit is 0, it may indicate that the PSSCH DMRS does not belong to the sidelink signal used to determine the sidelink path loss. For another example, a special bit may be set in a field of the first configuration information. If a bit value of the bit is 1, it may indicate that the PSSCH DMRS and the PSCCH DMRS belong to the sidelink signal used to determine the sidelink path loss. If the bit is 0, it may indicate that the PSSCH DMRS and the PSCCH DMRS do not belong to the sidelink signal used to determine the sidelink path loss.

In this embodiment of this application, step 406 performed by the second terminal device shown in FIG. 4 is a possible example. When the second terminal device does not obtain the receive power of the first sidelink signal, another implementation may be further performed.

For example, when the second terminal device does not obtain the receive power of the first sidelink signal, the second terminal device may report, to the network device, information indicating a measurement error. The network device may indicate, based on the information indicating the measurement error, the first terminal device to continue to send the sidelink positioning reference signal; or indicate the second terminal device to measure the PSSCH DMRS or the PSCCH DMRS from the first terminal device, and feed back, to the first terminal device, an obtained receive power that is of the PSSCH DMRS or the PSCCH DMRS and that is included in the first information.

For another example, when the second terminal device does not obtain the receive power of the first sidelink signal, the second terminal device may continue to wait for a next sidelink positioning reference signal from the first terminal device until the second terminal device successfully obtains a receive power of one sidelink positioning reference signal, and then feeds back information about the receive power of the sidelink positioning reference signal to the first terminal device.

For another example, when the second terminal device does not obtain the receive power of the first sidelink signal, the second terminal device may feed back, to the first terminal device, information that is about a receive power of a historical sidelink positioning reference signal from the first terminal device, the PSSCH DMRS, or the PSCCH DMRS and that is included in the first information, so that the first terminal device estimates the sidelink path loss based on the receive power and a transmit power of the historical sidelink positioning reference signal, the PSSCH DMRS, or the PSCCH DMRS.

**Step 404:** The second terminal device sends information about the receive power of the first sidelink signal to the first terminal device.

Correspondingly, the first terminal device receives the information about the receive power of the first sidelink signal.

In step 404, the second terminal device may send the information about the receive power of the first sidelink signal to the network device, and then the network device sends the information about the receive power of the first sidelink signal to the first terminal device. In another possible implementation, the second terminal device may directly send the information about the receive power of the first sidelink signal to the first terminal device through the PC5 interface.

In this embodiment of this application, the information about the receive power of the first sidelink signal may be, for example, a reference signal received power (reference signal received power, RSRP) of the first sidelink signal. In this case, the first information includes the information about the receive power of the first sidelink signal.

**Step 405:** When receiving the receive power of the first sidelink signal, the first terminal device determines the sidelink path loss based on the receive power of the first sidelink signal and the transmit power of the first sidelink signal.

In another possible implementation, when the first information includes the information about the receive power of the first sidelink signal, the first information further includes the resource identifier of the first sidelink signal and/or the resource set identifier corresponding to the resource of the first sidelink signal. In this way, the first terminal device may determine, based on the resource identifier and/or the resource set identifier that are/is included in the first information, the sidelink signal corresponding to the receive power included in the first information, and then determine the sidelink path loss based on the transmit power of the sidelink signal and the receive power in the first information.

In another possible implementation, in step 404, the second terminal device may send information about the sidelink path loss to the first terminal device. The first information includes the information about the sidelink path loss. The information about the sidelink path loss may be determined based on the first sidelink signal. For example, the first terminal device may further send information about the transmit power of the first sidelink signal to the second terminal device, and the second terminal device determines the sidelink path loss based on the receive power and the transmit power of the first sidelink signal.

**Step 406:** The second terminal device obtains the receive power of the second sidelink signal.

**Step 407:** The second terminal device sends information about the receive power of the second sidelink signal to the first terminal device.

Correspondingly, the first terminal device receives the information about the receive power of the second sidelink signal from the second terminal device.

In step 407, the second terminal device may send the information about the receive power of the second sidelink signal to the network device, and then the network device sends the information about the receive power of the second sidelink signal to the first terminal device. In another possible implementation, the second terminal device may directly send the information about the receive power of the second sidelink signal to the first terminal device through the PC5 interface.

In this embodiment of this application, the information about the receive power of the second sidelink signal may be, for example, an RSRP of the second sidelink signal. In this case, the first information includes the information about the receive power of the second sidelink signal.

**Step 408:** When receiving the receive power of the second sidelink signal, the first terminal device determines the sidelink path loss based on the receive power of the second sidelink signal and a transmit power of the second sidelink signal.

In another possible implementation, if the first terminal device receives receive powers of a plurality of sidelink signals, the first terminal device may determine the sidelink path loss based on the receive power of the one or more sidelink signals.

In another possible implementation, when the first information includes the information about the receive power of the second sidelink signal, the first information further includes a resource identifier of the second sidelink signal and/or a resource set identifier corresponding to a resource of the second sidelink signal. In this way, the first terminal device may determine, based on the resource identifier and/or the resource set identifier that are/is included in the first information, the sidelink signal (for example, the second sidelink signal) corresponding to the receive power included in the first information, and then determine the sidelink path loss based on the transmit power of the sidelink signal and the receive power in the first information.

In another possible implementation, in step 407, the second terminal device may send information about the sidelink path loss to the first terminal device. The first information includes the information about the sidelink path loss. The information about the sidelink path loss may be determined based on the second sidelink signal. For example, the first terminal device may further send information about the transmit power of the second sidelink signal to the second terminal device, and the second terminal device determines the sidelink path loss based on the receive power and the transmit power of the second sidelink signal.

In this embodiment of this application, the first terminal device may not successfully receive the information about the receive power of the first sidelink signal. For example, the second terminal device does not feed back the information about the receive power of the first sidelink signal, or the first terminal device fails to receive the receive power of the first sidelink signal. In this case, for the first terminal device, there may be a plurality of possible implementations.

For example, in the embodiment shown in FIG. 4, the first terminal device may determine whether the information about the receive power of the second sidelink signal is received; and when successfully receiving the receive power of the second sidelink signal, determine the sidelink path loss based on the receive power of the second sidelink signal and the transmit power of the second sidelink signal.

For another example, the first terminal device may determine the sidelink path loss based on a receive power of one or more of the historical positioning sidelink signal, the PSSCH DMRS, or the PSCCH DMRS that is previously fed back by the second terminal device and transmit powers of these signals.

**Manner 2:** The first information includes the information about the transmit power of the sidelink signal sent by the second terminal device.

In this implementation, the second terminal device may send the sidelink signal used to determine the sidelink path loss, so that the first terminal device measures the sidelink signal. For example, the first information includes information about a transmit power of a third sidelink signal, where the third sidelink signal is from the second terminal device, and a type of the third sidelink signal includes a sidelink positioning reference signal; and/or information about a transmit power of a fourth sidelink signal, where the fourth sidelink signal is from the second terminal device, the third sidelink signal includes a sidelink positioning reference signal, and a type of the fourth sidelink signal includes a PSSCH DMRS or a PSCCH DMRS. In this solution, the sidelink path loss is determined based on information transmitted between the first terminal device and the second terminal device through a sidelink, so that accuracy of the sidelink path loss can be improved.

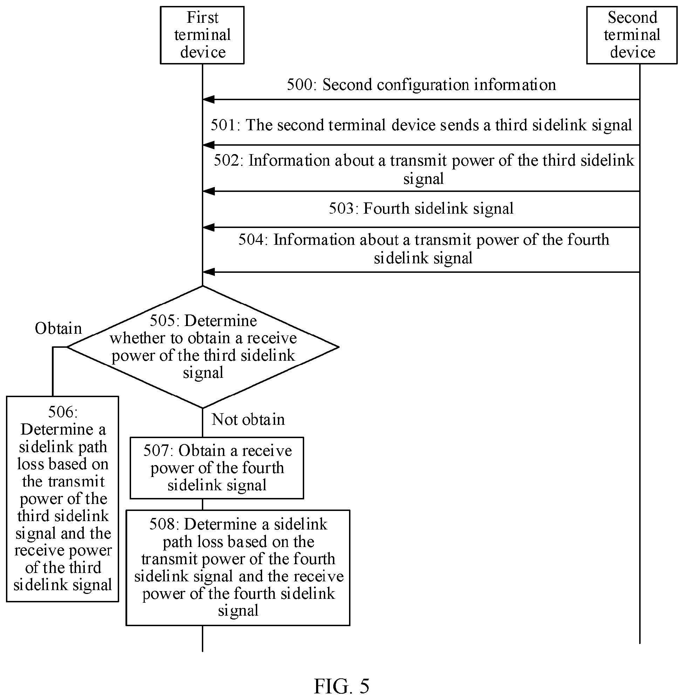

**FIG. 5** is an example of a possible schematic flowchart of a method for determining a sidelink path loss according to an embodiment of this application. As shown in FIG. 5, the method includes the following steps.

**Step 500:** A second terminal device sends second configuration information to a first terminal device.

Correspondingly, the first terminal device receives the second configuration information.

The second configuration information indicates information about a sidelink signal used to determine the sidelink path loss. In this way, the second terminal device may perform measurement based on the sidelink signal configured by using the first configuration information, so that a process of determining the sidelink path loss can be better managed and controlled.

In step 500, the second terminal device may send the second configuration information to the first terminal device through a PC5 interface, or may send the second configuration information to a network device, so that the network device sends the second configuration information to the first terminal device. In another possible implementation, the second configuration information may alternatively be configured by the network device for the first terminal device. For example, the network device may send the second configuration information (for example, send the second configuration information by using an RRC message) to the first terminal device. In FIG. 5, an example in which the second terminal device sends the second configuration information to the first terminal device is used for illustration.

The second configuration information may include one or more of information about a second signal type, a second resource identifier, or a second resource set identifier. It may be learned that there are a plurality of manners of configuring the sidelink signal by using the second configuration information, and the manners are flexible, so that flexibility of the solution can be improved. The second signal type is a type of the sidelink signal used to determine the sidelink path loss. The second signal type may include one or more of a sidelink positioning reference signal, a PSSCH DMRS, or a PSCCH DMRS. The second resource identifier may include an identifier of one or more resources. The second resource set identifier may also include an identifier of one or more resource sets.

If the second signal type includes the sidelink positioning reference signal, because a determined target transmit power is a transmit power of a first sidelink positioning reference signal, the sidelink path loss determined based on the sidelink positioning reference signal can more accurately reflect an environment faced by the first sidelink positioning reference signal, and then accuracy of the target transmit power can be improved. In another possible implementation, the second signal type further includes a PSSCH DMRS type and/or a PSCCH DMRS type. In addition, because the first terminal device may further measure a PSSCH DMRS and/or a PSCCH DMRS, and determine the sidelink path loss based on a measurement result, so that flexibility of the solution can be improved. In addition, if the second signal type does not include the sidelink positioning reference signal, the second terminal device may not need to send the sidelink positioning reference signal to determine the sidelink path loss, so that a quantity of signals sent by the second terminal device can be reduced, and power consumption of the first terminal device can be reduced.

After receiving the second configuration information, the first terminal device may determine, based on the second configuration information, the sidelink signal whose receive power needs to be measured. For example, the second signal type includes the sidelink positioning reference signal, and the first terminal device may measure the received sidelink positioning reference signal. For another example, the second configuration information includes the second resource identifier. The first terminal device may measure the received sidelink signal on a resource in the one or more resources indicated by the second resource identifier, to obtain a receive power of one or more sidelink signals, and then the first terminal device determines the sidelink path loss based on a maximum value, a larger value, an average value, or the like of the receive power of the one or more sidelink signals. For another example, the second configuration information includes the second resource set identifier. The first terminal device may measure the received sidelink signal on a resource in the one or more resources indicated by the second resource set identifier, to obtain a receive power of one or more sidelink signals, and then the first terminal device determines the sidelink path loss based on a maximum value, a larger value, an average value, or the like of the receive power of the one or more sidelink signals. For example, the first terminal device determines the sidelink path loss based on the maximum value of the obtained receive power of the one or more sidelink signals and a transmit power of a sidelink signal corresponding to the maximum value.

Step 500 may be an optional step, and the first terminal device may not receive the second configuration information. In this case, in a possible implementation, the first terminal device may measure the received sidelink positioning reference signal on a resource of the sidelink positioning reference signal, and determine the sidelink path loss based on one or more receive powers obtained through measurement.

**Step 501:** The second terminal device sends a third sidelink signal.

The first terminal device may receive the third sidelink signal. A type of the third sidelink signal includes a sidelink positioning reference signal.

**Step 502:** The second terminal device sends information about a transmit power of the third sidelink signal to the first terminal device.

Correspondingly, the first terminal device receives the information about the transmit power of the third sidelink signal.

In step 502, the second terminal device may send the information about the transmit power of the third sidelink signal to the network device, and then the network device sends the information about the transmit power of the third sidelink signal to the first terminal device. In another possible implementation, the second terminal device may directly send the information about the transmit power of the third sidelink signal to the first terminal device through the PC5 interface. In another possible implementation, the second terminal device may further send a resource identifier and/or a resource set identifier of the third sidelink signal to the first terminal device, so that the first terminal device learns of a resource and/or a resource set of a sidelink signal corresponding to the information, about the transmit power, that is sent by the second terminal device in step 502. The resource identifier and/or the resource set identifier of the third sidelink signal and the information about the transmit power of the third sidelink signal may be carried in a same message.

Step 502 may be performed before step 506, and there is no absolute sequence between step 502 and any one of step 500 to step 505. For example, step 502 may be performed first, and then one or more steps in step 500 to step 505 are performed.

**Step 503:** The second terminal device sends a fourth sidelink signal.

The first terminal device may receive the fourth sidelink signal. A type of the fourth sidelink signal includes a PSSCH DMRS or a PSCCH DMRS.

There is no sequence between step 501 and step 503, and step 503 may be performed before step 501.

**Step 504:** The second terminal device sends information about a transmit power of the fourth sidelink signal to the first terminal device.

Correspondingly, the first terminal device receives the information about the transmit power of the fourth sidelink signal from the second terminal device.

In step 504, the second terminal device may send the information about the transmit power of the fourth sidelink signal to the network device, and then the network device sends the information about the transmit power of the fourth sidelink signal to the first terminal device. In another possible implementation, the second terminal device may directly send the information about the transmit power of the fourth sidelink signal to the first terminal device through the PC5 interface. In another possible implementation, the second terminal device may further send a resource identifier and/or a resource set identifier of the fourth sidelink signal to the first terminal device, so that the first terminal device learns of a resource and/or a resource set of a sidelink signal corresponding to the received information, about the transmit power, that is sent by the second terminal device in step 504. The resource identifier and/or the resource set identifier of the fourth sidelink signal and the information about the transmit power of the fourth sidelink signal may be carried in a same message.

Step 504 may be performed before step 508, and there is no absolute sequence between step 504 and any one of step 500 to step 507. For example, step 504 may be performed first, and then one or more steps in step 500 to step 507 are performed.

**Step 505:** The first terminal device determines whether to obtain a receive power of the third sidelink signal.

When the first terminal device obtains the receive power of the third sidelink signal, step 506 is performed.

When the first terminal device does not obtain the receive power of the third sidelink signal, step 507 is performed.

In this embodiment of this application, an example in which the third sidelink signal is a sidelink positioning reference signal and the fourth sidelink signal is not a sidelink positioning reference signal (where for example, the fourth sidelink signal is a PSSCH DMRS or a PSCCH DMRS) is used for description. In this embodiment of this application, the receive power that is of the third sidelink signal and that is obtained by the first terminal device may be understood as a receive power of the sidelink positioning reference signal.

In a possible implementation, before step 505, the first terminal device may receive the second configuration information. For example, the second signal type includes the type of the third sidelink signal. After receiving the second configuration information, the first terminal device measures the received sidelink positioning reference signal, and the first terminal device may determine the receive power of the third sidelink signal based on an obtained receive power of one or more sidelink signals. For example, a maximum value, a larger value, or an average value of the receive power of the one or more sidelink signals is used as the receive power of the third sidelink signal. For another example, the second resource identifier includes a resource identifier of the third sidelink signal. For another example, the second resource set identifier may include a resource set identifier of a resource of the third sidelink signal. Similarly, the first terminal device may perform measurement based on the second resource identifier and/or the second resource set identifier that are/is included in the second configuration information, and determine the receive power of the third sidelink signal based on the obtained receive power of the one or more sidelink signals. For example, the maximum value, the larger value, or the average value of the receive power of the one or more sidelink signals is used as the receive power of the third sidelink signal. For related content, refer to related descriptions of step 500. Details are not described again.

In step 505, the first terminal device may not obtain the receive power of the third sidelink signal. For example, the first terminal device may not successfully receive the third sidelink signal. Alternatively, the second terminal successfully receives the third sidelink signal, but cannot measure the receive power of the third sidelink signal, or fails to measure the third sidelink signal or encounters a measurement error. When the first terminal device does not obtain the receive power of the third sidelink signal, for the first terminal device, there may be a plurality of implementations. For example, as shown in FIG. 5, when the first terminal device does not obtain the receive power of the third sidelink signal (for example, the sidelink positioning reference signal), the first terminal device may measure the fourth sidelink signal (for example, the PSSCH DMRS or the PSCCH DMRS), and determine the sidelink path loss based on an obtained receive power of the fourth sidelink signal. This example is used for illustration in FIG. 5.

In the implementation shown in FIG. 5, the second signal type in the second configuration information may include the type of the fourth sidelink signal. For example, the second signal type may include the PSSCH DMRS and/or the PSCCH DMRS. In this way, when the first terminal device does not obtain the receive power of the third sidelink signal, the first terminal device may measure the PSSCH DMRS and/or the PSCCH DMRS (for example, the fourth sidelink signal), and determine the sidelink path loss based on an obtained measurement result.

In another possible implementation, the first signal type in the second configuration information may not include the type of the fourth sidelink signal. In this way, when the first terminal device does not obtain the receive power of the third sidelink signal, the first terminal device may measure the PSSCH DMRS and/or the PSCCH DMRS (for example, the fourth sidelink signal) according to a preset rule or a default rule, and determine the sidelink path loss based on an obtained measurement result.

In another possible implementation, the second configuration information may include information indicating that the PSSCH DMRS belongs to the sidelink signal used to determine the sidelink path loss, or information indicating that the PSSCH DMRS does not belong to the sidelink signal used to determine the sidelink path loss. The second configuration information may also include information indicating that the PSCCH DMRS belongs to the sidelink signal used to determine the sidelink path loss, or information indicating that the PSCCH DMRS does not belong to the sidelink signal used to determine the sidelink path loss. In this way, when the first terminal device does not obtain the receive power of the third sidelink signal, the first terminal device may measure the PSSCH DMRS and/or the PSCCH DMRS (for example, the fourth sidelink signal) according to a preset rule or a default rule, and determine the sidelink path loss based on an obtained measurement result.

For example, a special bit may be set in a field of the second configuration information. If a bit value of the bit is 1, it may indicate that the PSSCH DMRS belongs to the sidelink signal used to determine the sidelink path loss. If the bit is 0, it may indicate that the PSSCH DMRS does not belong to the sidelink signal used to determine the sidelink path loss. For another example, a special bit may be set in a field of the second configuration information. If a bit value of the bit is 1, it may indicate that the PSSCH DMRS and the PSCCH DMRS belong to the sidelink signal used to determine the sidelink path loss. If the bit is 0, it may indicate that the PSSCH DMRS and the PSCCH DMRS do not belong to the sidelink signal used to determine the sidelink path loss.

In this embodiment of this application, step 507 performed by the first terminal device shown in FIG. 5 is a possible example. When the first terminal device does not obtain the receive power of the third sidelink signal, another implementation may be further performed.

For example, when the first terminal device does not obtain the receive power of the third sidelink signal, the first terminal device may report, to the network device, information indicating a measurement error. The network device may indicate, based on the information indicating the measurement error, the second terminal device to continue to send the sidelink positioning reference signal; or indicate the first terminal device to measure the PSSCH DMRS or the PSCCH DMRS from the second terminal device, and determine the sidelink path loss based on an obtained receive power of the PSSCH DMRS or the PSCCH DMRS.

For another example, when the first terminal device does not obtain the receive power of the third sidelink signal, the first terminal device may continue to wait for a next sidelink positioning reference signal from the second terminal device until the first terminal device successfully obtains a receive power of one sidelink positioning reference signal, and then determine the sidelink path loss based on the obtained receive power of the sidelink positioning reference signal.

For another example, when the first terminal device does not obtain the receive power of the third sidelink signal, the first terminal device may estimate the sidelink path loss based on a receive power and a transmit power of a historical sidelink positioning reference signal from the second terminal device, the PSSCH DMRS, or the PSCCH DMRS.

Step 506: The first terminal device determines the sidelink path loss based on the transmit power of the third sidelink signal and the receive power of the third sidelink signal.

It may be learned that in this implementation, when the first terminal device obtains the receive power of the third sidelink signal, the first terminal device determines the sidelink path loss based on the receive power of the third sidelink signal and the transmit power of the third sidelink signal. Because the determined target transmit power is a transmit power of the first sidelink positioning reference signal, the sidelink path loss determined based on the sidelink positioning reference signal can more accurately reflect an environment faced by the first sidelink positioning reference signal, and then accuracy of the target transmit power can be improved.

Step 507: The first terminal device obtains the receive power of the fourth sidelink signal.

Step 508: The first terminal device determines the sidelink path loss based on the transmit power of the fourth sidelink signal and the receive power of the fourth sidelink signal.

In this embodiment of this application, the first terminal device may not successfully receive the information about the transmit power of the third sidelink signal. For example, the second terminal device does not feed back the information about the transmit power of the third sidelink signal, or the first terminal device fails to receive the information about the transmit power of the third sidelink signal. In this case, for the first terminal device, there may be a plurality of possible implementations.

For example, in the embodiment shown in FIG. 5, the first terminal device may determine whether the information about the transmit power of the fourth sidelink signal is received; and when successfully receiving the transmit power of the fourth sidelink signal, determine the sidelink path loss based on the transmit power of the fourth sidelink signal and the receive power of the fourth sidelink signal. In this way, flexibility of the solution can be improved. In addition, because the fourth sidelink signal is a signal transmitted between the second terminal device and the first terminal device based on a sidelink, the fourth sidelink signal can also accurately reflect the sidelink path loss, and then accuracy of the target transmit power can be improved.

For another example, the first terminal device may determine the sidelink path loss based on a transmit power of one or more of the historical positioning sidelink signal, the PSSCH DMRS, or the PSCCH DMRS that is previously fed back by the second terminal device and receive powers of these signals.

In this embodiment of this application, because the first sidelink positioning reference signal and the sidelink signal used to determine the sidelink path loss may have different frequencies, in a possible implementation, the sidelink path loss may be determined based on a difference between frequencies of the first sidelink positioning reference signal and the sidelink signal. In this way, a more accurate sidelink path loss can be obtained. The following describes two possible implementations.

**Implementation 1**

In Implementation 1, the first terminal device determines a quasi-sidelink path loss based on the first information; and the first terminal device determines the sidelink path loss based on the quasi-sidelink path loss and a first offset, where the first offset is determined based on a difference between a frequency of a sidelink signal associated with the quasi-sidelink path loss and a frequency of the first sidelink positioning reference signal. For example, the sidelink path loss is a sum of the sidelink path loss and the first offset. In this way, complexity of the solution can be reduced.

In this embodiment of this application, the sidelink signal associated with the quasi-sidelink path loss may be the sidelink signal used to determine the sidelink path loss. For example, if the first terminal device determines the sidelink path loss based on the first sidelink signal in FIG. 4, the sidelink signal associated with the quasi-sidelink path loss may be the first sidelink signal, and the first terminal device may use a difference between the transmit power and the receive power of the first sidelink signal as the quasi-sidelink path loss. Similarly, the sidelink signal associated with the quasi-sidelink path loss may alternatively be the second sidelink signal in FIG. 4, or the third sidelink signal or the fourth sidelink signal in FIG. 5. A related solution is similar to a related solution of the first sidelink signal. Details are not described again.

For example, the first terminal device determines the sidelink path loss according to the following formula:

$$PL_{PRS,SL}(i) = PL_{PRS,SL\_n}(i) + \Delta P_1 \qquad \qquad \text{Formula (4)}$$

In Formula (4), $PL_{PRS,SL}(i)$ represents the sidelink path loss, $PL_{PRS,SL\_n}(i)$ represents the quasi-path loss, and $\Delta P_1$ represents the first offset.

For example, the first offset $\Delta P_1$ in Formula (4) may be calculated by using a formula $\Delta P_1 = 20 lg(\frac{f_n}{f})$, where $f_n$ is the frequency of the sidelink signal associated with the quasi-sidelink path loss, and $f$ is the frequency of the first sidelink positioning reference signal. It may be learned that the formula can accurately reflect the difference between the frequency of the sidelink signal associated based on the quasi-sidelink path loss and the frequency of the first sidelink positioning reference signal.

**Implementation 2**

In Implementation 2, the first terminal device determines a fifth transmit power based on the second parameter and the sidelink path loss. The sidelink path loss may be determined by using the foregoing content, for example, may be determined by using related content in FIG. 4 or FIG. 5. The first terminal device determines the second transmit power based on the fifth transmit power and a second offset, where the second offset is determined based on a difference between a frequency of the sidelink signal associated with the sidelink path loss and a frequency of the first sidelink positioning reference signal. It may be learned that in this solution, a process of determining the second transmit power may be adjusted by using the second offset, so that a more accurate second transmit power can be obtained, and then accuracy of the target transmit power can be improved. For example, the second transmit power is equal to a sum of the fifth transmit power and the second offset. In this way, complexity of the solution can be reduced.

In this embodiment of this application, the sidelink signal associated with the quasi-sidelink path loss may be the sidelink signal used to determine the sidelink path loss. For example, if the first terminal device determines the sidelink path loss based on the first sidelink signal in FIG. 4, the sidelink signal associated with the sidelink path loss may be the first sidelink signal, and the first terminal device may use a difference between the transmit power and the receive power of the first sidelink signal as the sidelink path loss. Similarly, the sidelink signal associated with the sidelink path loss may alternatively be the second sidelink signal in FIG. 4, or the third sidelink signal or the fourth sidelink signal in FIG. 5. A related solution is similar to a related solution of the first sidelink signal. Details are not described again.

For example, the first terminal device determines the second transmit power according to the following formula:

$$P_{PRS,SL}(i) = P_{PRS,SL\_n}(i) + \Delta P_2 \qquad \text{Formula (5)}$$

In Formula (5), $P_{PRS,SL}(i)$ represents the second transmit power, $P_{PRS,SL\_n}(i)$ represents the fifth transmit power, and $\Delta P_2$ represents the second offset.

For example, the second offset $\Delta P_2$ in Formula (5) may be calculated by using a formula $\Delta P_2 = \alpha_{SL} \cdot 20lg(\frac{f_n}{f})$, where $\alpha_{SL}$ represents a sidelink path loss adjustment value, $f_n$ is the frequency of the sidelink signal associated with the quasi-sidelink path loss, and $f$ is the frequency of the first sidelink positioning reference signal. It may be learned that the formula can accurately reflect the difference between the frequency of the sidelink signal associated based on the quasi-sidelink path loss and the frequency of the first sidelink positioning reference signal. The sidelink path loss adjustment value $\alpha_{SL}$ in the formula may also be changed to another coefficient. This is not limited in this embodiment of this application.

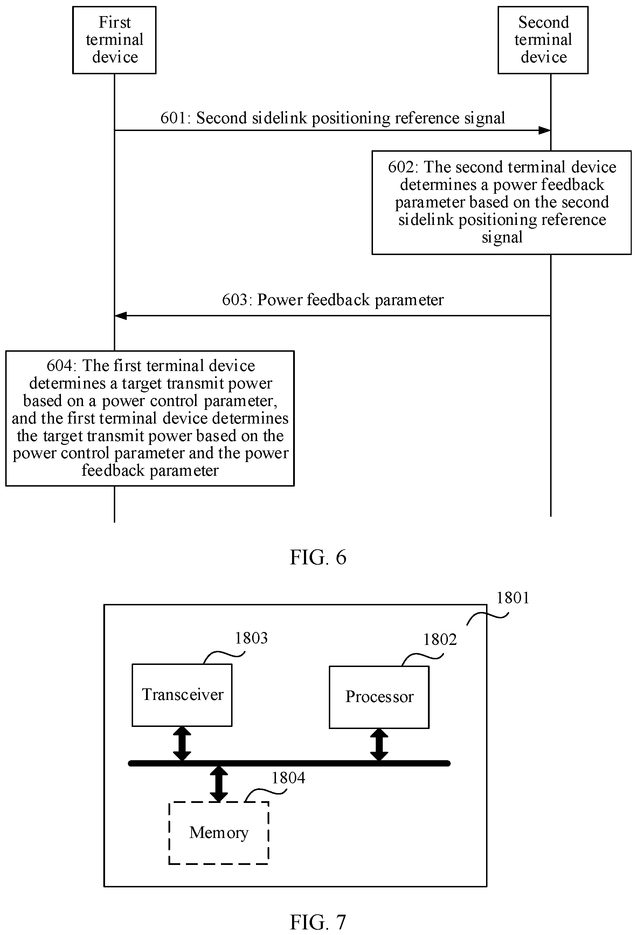

Based on the embodiments shown in FIG. 1, FIG. 2, FIG. 3, FIG. 4, and FIG. 5 and other content, **FIG. 6** is an example of a possible schematic flowchart of another communication method according to an embodiment of this application. For related content of the execution body in FIG. 6, refer to related descriptions in FIG. 3. Details are not described again.

As shown in FIG. 6, the method includes the following steps.

**Step 601:** A first terminal device sends a second sidelink positioning reference signal.

Correspondingly, a second terminal device may receive the second sidelink positioning reference signal.

**Step 602:** The second terminal device determines a power feedback parameter based on the second sidelink positioning reference signal.

The power feedback parameter is determined based on a receive power of the second sidelink positioning reference signal and a receive power of a sidelink positioning reference signal that the second terminal device expects to receive.

**Step 603:** The second terminal device sends the power feedback parameter to the first terminal device.

Correspondingly, the first terminal device receives the power feedback parameter from the second terminal device.

In step 603, the power feedback parameter may be carried in a request message, a measurement feedback message, a PC5 RRC message, a media access control control element (media access control control element, MAC CE), SCI, or the like.

**Step 604:** The first terminal device determines a target transmit power based on a power control parameter, and the first terminal device determines the target transmit power based on the power control parameter and the power feedback parameter.

For example, a distance between the first terminal device and the second terminal device is greater than a distance between the first terminal device and a network device. To be specific, the distance between the first terminal device and the second terminal device is long, and the distance between the first terminal device and the network device is short. A longer distance may cause a larger path loss, a sidelink path loss may be greater than a downlink path loss, and then a second transmit power obtained based on the sidelink path loss may be greater than a first transmit power calculated based on the downlink path loss. If the first terminal device selects a smaller value (namely, the first transmit power) of the first transmit power and the second transmit power, or selects a value smaller than the smaller value as the target transmit power, because the sidelink path loss may be large, the target transmit power selected by the first terminal device may be small, and consequently a transmit power of a first sidelink positioning reference signal sent by the first terminal device is insufficient.

However, in the solution provided in this embodiment of this application, the first terminal device may determine the target transmit power based on the power feedback parameter, so that a disadvantage of an open-loop power control mechanism can be compensated for, and the target transmit power can be better through feedback and adjustment. For example, when the second terminal device may indicate, by using the power feedback parameter, the first terminal device to increase a transmit power of the sidelink positioning reference signal, the first terminal device may increase the target transmit power based on the power feedback parameter, to alleviate the problem that the transmit power of the first sidelink positioning reference signal is insufficient. For another example, when the second terminal device may indicate, by using the power feedback parameter, the first terminal device to decrease a transmit power of the sidelink positioning reference signal, the first terminal device may decrease the target transmit power based on the power feedback parameter, to reduce power consumption of the first terminal device, and reduce interference to another transmitted signal.

In step 604, a plurality of possible implementations may be included. The following uses examples of Implementation 1 to Implementation 5 for description.

**Implementation 1**

The first terminal device adjusts the first transmit power based on the power feedback parameter, and the first terminal device determines the target transmit power based on an adjusted first transmit power. For example, the first terminal device may multiply the power feedback parameter by a preset coefficient and then add the power feedback parameter to the first transmit power, an obtained value is the adjusted first transmit power, and the preset coefficient may be equal to 1 or may not be equal to 1.

There are a plurality of manners in which the first terminal device determines the target transmit power based on the adjusted first transmit power. For example, the first terminal device may determine the target transmit power based on one or more of the adjusted first transmit power, the second transmit power, a third transmit power, and a fourth transmit power. A related solution is similar to a previous solution in which the first terminal device determines the target transmit power based on one or more of the first transmit power, the second transmit power, the third transmit power, and the fourth transmit power. A difference lies in that the first transmit power is replaced with the adjusted first transmit power. For a solution of determining the first transmit power, refer to the foregoing content. Details are not described again.

Because the first terminal device may adjust the first transmit power based on the power feedback parameter, a value of the adjusted first transmit power may be increased, so that the target transmit power can be improved, and then a problem that the transmit power of the first sidelink positioning reference signal is insufficient can be alleviated. In another case, a value of the adjusted first transmit power may be decreased, so that the target transmit power can be reduced, power consumption of the first terminal device can be reduced, and interference between signals can also be reduced.

For example, the first terminal device may adjust the first transmit power according to a formula. For example, the adjusted first transmit power may be calculated by using Formula (6) below:

$$\text{adjusted first transmit power} = P_{\text{PRS,D}}(i) + \alpha * \Delta P \qquad \text{Formula (6)}$$

In Formula (6), $P_{\text{PRS,D}}(i)$ represents the first transmit power; $\Delta P$ represents the power feedback parameter, for example, may be a difference between the receive power of the second sidelink positioning reference signal and the receive power of the sidelink positioning reference signal that the second terminal device expects to receive; and $\alpha$ may be a preset value.

On a basis of Formula (6), Formula (1) above may be replaced with Formula (7) below:

$$P_{PRS}(i) = min\left(P_{CMAX}, P_{MAX,CBR}, min\left(P_{PRS,D}(i) + \alpha * \Delta P, P_{PRS,SL}(i)\right)\right) \qquad \text{Formula (7)}$$

For meanings of the parameters in Formula (7), refer to related content in Formula (1) and Formula (6) above. Details are not described again.

In a possible implementation, $\alpha$ in Formula (6) and Formula (7) may be 1. In this case, Formula (7) may be replaced with Formula (8) below:

$$P_{PRS}(i) = \min\left(P_{CMAX}, P_{MAX,CBR}, \min\left(P_{PRS,D}(i) + \Delta P, P_{PRS,SL}(i)\right)\right) \qquad \text{Formula (8)}$$

For meanings of the parameters in Formula (8), refer to related content in Formula (1) and Formula (6). Details are not described again.

**Implementation 2**

The first terminal device adjusts the second transmit power based on the power feedback parameter, and the first terminal device determines the target transmit power based on an adjusted second transmit power. For example, the first terminal device may multiply the power feedback parameter by a preset coefficient and then add the power feedback parameter to the second transmit power, an obtained value is the adjusted second transmit power, and the preset coefficient may be equal to 1 or may not be equal to 1.

There are a plurality of manners in which the first terminal device determines the target transmit power based on the adjusted second transmit power. For example, the first terminal device may determine the target transmit power based on one or more of the adjusted second transmit power, the first transmit power, a third transmit power, and a fourth transmit power. A related solution is similar to a previous solution in which the first terminal device determines the target transmit power based on one or more of the first transmit power, the second transmit power, the third transmit power, and the fourth transmit power. A difference lies in that the second transmit power is replaced with the adjusted second transmit power. For a solution of determining the second transmit power, refer to the foregoing content. Details are not described again.

Because the first terminal device may adjust the second transmit power based on the power feedback parameter, a value of the adjusted second transmit power may be increased, so that the target transmit power can be improved, and then a problem that the transmit power of the first sidelink positioning reference signal is insufficient can be alleviated. In another case, a value of the adjusted second transmit power may be decreased, so that the target transmit power can be reduced, power consumption of the first terminal device can be reduced, and interference between signals can also be reduced.

For example, the first terminal device may adjust the second transmit power according to a formula. For example, the adjusted second transmit power may be calculated by using Formula (9) below:

$$\text{adjusted second transmit power} = P_{PRS,SL}(i) + \alpha * \Delta P \qquad \text{Formula (9)}$$

In Formula (9), $P_{PRS,SL}(i)$ represents the second transmit power; $\Delta P$ represents the power feedback parameter, for example, may be a difference between the receive power of the second sidelink positioning reference signal and the receive power of the sidelink positioning reference signal that the second terminal device expects to receive; and $\alpha$ may be a preset value.

On a basis of Formula (9), Formula (1) above may be replaced with Formula (10) below:

$$P_{PRS}(i) = \min\left(P_{CMAX}, P_{MAX,CBR}, \min\left(P_{PRS,D}(i), P_{PRS,SL}(i) + \alpha * \Delta P\right)\right) \qquad \text{Formula (10)}$$

For meanings of the parameters in Formula (10), refer to related content in Formula (1) and Formula (9). Details are not described again.

In a possible implementation, $\alpha$ in Formula (10) and Formula (9) may be 1. In this case, Formula (10) may be replaced with Formula (11) below:

$$P_{PRS}(i) = \min\left(P_{CMAX}, P_{MAX,CBR}, \min\left(P_{PRS,D}(i), P_{PRS,SL}(i) + \Delta P\right)\right) \qquad \text{Formula (11)}$$

For meanings of the parameters in Formula (11), refer to related content in Formula (1) and Formula (6). Details are not described again.

**Implementation 3**

The first terminal device determines a quasi-target transmit power based on the first transmit power and/or the second transmit power, and determines the target transmit power based on the quasi-target transmit power and the power feedback parameter. For example, the first terminal device may add the power feedback parameter to the quasi-target transmit power or multiply the power feedback parameter by the quasi-target transmit power, and another operation parameter may also be added in the operation process.

There are a plurality of manners in which the first terminal device determines the quasi-target transmit power based on the first transmit power and/or the second transmit power. For example, the first terminal device may determine the quasi-target transmit power based on one or more of the first transmit power, the second transmit power, a third transmit power, and a fourth transmit power. For example, the first terminal device may select a smallest value in the first transmit power, the second transmit power, the third transmit power, and the fourth transmit power as the quasi-target transmit power. A related solution is similar to a previous solution in which the first terminal device determines the target transmit power based on one or more of the first transmit power, the second transmit power, the third transmit power, and the fourth transmit power.

The first terminal device may adjust the quasi-target transmit power based on the power feedback parameter, and then use an obtained value as the transmit power of the first sidelink positioning reference signal. In this solution, complexity of the solution can be reduced, and the target transmit power can be better.

In a possible implementation, Formula (1) may be replaced with Formula (12) below:

$$P_{PRS}(i) = \min\left(P_{CMAX}, P_{MAX,CBR}, \min\left(P_{PRS,D}(i), P_{PRS,SL}(i)\right)\right) + \Delta P \qquad \text{Formula (12)}$$

In Formula (12), $\Delta P$ represents the power feedback parameter. For meanings of other parameters in Formula (12), refer to related content in Formula (1) above. Details are not described again.

In **another** possible implementation, Formula (1) may be replaced with Formula (13) below:

$$P_{PRS}(i) = \min\left(P_{CMAX}, P_{MAX,CBR}, \min\left(P_{PRS,D}(i), P_{PRS,SL}(i)\right)\right) * \Delta P \qquad \text{Formula (13)}$$

In Formula (13), $\Delta P$ represents the power feedback parameter, and * represents multiplication. For meanings of other parameters in Formula (13), refer to related content in Formula (1) above. Details are not described again.

**Implementation 4**

The first terminal device adjusts a transmit power of the second sidelink positioning reference signal based on the power feedback parameter, to obtain the target transmit power. For example, the first terminal device may add the power feedback parameter to the transmit power of the second sidelink positioning reference signal or multiply the power feedback parameter by the transmit power of the second sidelink positioning reference signal, and another operation parameter may also be added in the operation process. The transmit power of the second sidelink positioning reference signal is determined based on the power control parameter. The transmit power of the second sidelink positioning reference signal may be determined based on the manner of determining the target transmit power described in any one of the foregoing content in FIG. 3, FIG. 4, and FIG. 5. Details are not described again.

The first terminal device may adjust the transmit power of the second sidelink positioning reference signal based on the power feedback parameter, and then use an obtained value as the transmit power of the first sidelink positioning reference signal. In this solution, complexity of the solution can be reduced, and the target transmit power can be better.

In a possible implementation, Formula (1) may be replaced with Formula (14) below:

$$P_{PRS}(i) = P_{PRS}(i-1) + \Delta P \qquad \text{Formula (14)}$$

In Formula (14), $\Delta P$ represents the power feedback parameter, and $P_{PRS}(i-1)$ represents the transmit power of the second sidelink positioning reference signal. For meanings of other parameters in Formula (14), refer to related content in Formula (1) above. Details are not described again.

In another possible implementation, Formula (1) may be replaced with Formula (15) below:

$$P_{PRS}(i) = P_{PRS}(i-1) * \Delta P \qquad \text{Formula (15)}$$

In Formula (15), $\Delta P$ represents the power feedback parameter, * represents multiplication, and $P_{PRS}(i-1)$ represents the transmit power of the second sidelink positioning reference signal. For meanings of other parameters in Formula (15), refer to related content in Formula (1) above. Details are not described again.

It should be noted that, in this embodiment of this application, that a network element (for example, a network element A) receives information from another network element (for example, a network element B) may mean that the network element A directly receives information from the network element B, or may mean that the network element A receives information from the network element B through another network element (for example, a network element C).

When the network element A receives the information from the network element B through the network element C, the network element C may transparently transmit the information, or may process the information, for example, include the information in different messages for transmission or screen the information, and send only information obtained through screening to the network element A. Similarly, in various embodiments of this application, that the network element A sends information to the network element B may mean that the network element A directly sends the information to the network element B, or may mean that the network element A sends the information to the network element B through another network element (for example, the network element C).

The terms "system" and "network" may be used interchangeably in embodiments of this application. "At least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" usually indicates an "or" relationship between the associated objects. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, unless otherwise specified, ordinal numbers such as "first" and "second" in embodiments of this application are used to distinguish between a plurality of objects, and are not used to limit a sequence, a time sequence, priorities, or importance of the plurality of objects.

It should be noted that, names of the foregoing messages are merely examples. With evolution of communication technologies, the name of any one of the foregoing messages may change. However, regardless of how the names of the messages change, the messages fall within the protection scope of this application provided that meanings of the messages are the same as those of the foregoing messages in this application.

According to the foregoing method, **FIG. 7** is a diagram of a structure of a communication apparatus according to an embodiment of this application. As shown in FIG. 7, the communication apparatus may be a first terminal device, a network device, or a second terminal device, or may be a chip or a circuit. For example, the communication apparatus may be a chip or a circuit that may be disposed in the first terminal device. For another example, the communication apparatus may be a chip or a circuit that may be disposed in the network device. For another example, the communication apparatus may be a chip or a circuit that may be disposed in the second terminal device. The communication apparatus may be configured to perform the method performed by the first terminal device, the network device, or the second terminal device in any one of the related solutions in FIG. 3, FIG. 4, FIG. 5, or FIG. 6.

The communication apparatus 1801 includes a processor 1802 and a transceiver 1803.

Further, the communication apparatus 1801 may include a memory 1804. In the figure, the memory 1804 is shown by dashed lines. This further indicates that the memory is optional.

Further, the communication apparatus 1801 may further include a bus system. The processor 1802, the memory 1804, and the transceiver 1803 may be connected through the bus system.

It should be understood that the processor 1802 may be a chip. For example, the processor 1802 may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip.

In an implementation process, the steps in the foregoing method may be completed through a hardware integrated logic circuit in the processor 1802, or by using instructions in a form of software. The steps in the method disclosed with reference to embodiments of this application may be directly performed and completed by a hardware processor, or may be performed and completed by using a combination of hardware in the processor 1802 and a software module. The software module may be located in a mature storage medium in the art, for example, a random access memory, a flash memory, a read-only memory, a programmable read-only memory, an electrically erasable programmable memory, or a register. The storage medium is located in the memory 1804. The processor 1802 reads information in the memory 1804 and completes the steps in the foregoing method in combination with hardware in the processor 1802.

It should be noted that, the processor 1802 in embodiments of this application may be an integrated circuit chip, and has a signal processing capability. In an implementation process, the steps in the foregoing method embodiments may be completed through a hardware integrated logic circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps in the method disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory. The processor reads information in the memory and completes the steps in the foregoing method in combination with hardware in the processor.

It may be understood that the memory 1804 in embodiments of this application may be a volatile memory or a nonvolatile memory, or may include both a volatile memory and a nonvolatile memory. For related descriptions of the memory in embodiments of this application, refer to the foregoing content. Details are not described herein again.

When the communication apparatus 1801 is the first terminal device, the processor 1802 is configured to: through the transceiver 1803, receive a power control parameter from a network device, and send a first sidelink positioning reference signal based on a target transmit power, where the target transmit power is determined based on the power control parameter, and the power control parameter has an association relationship with a resource pool of a sidelink positioning reference signal.

When the communication apparatus 1801 is the first terminal device, in a possible implementation, the processor 1802 is specifically configured to determine a target transmit power based on a first transmit power and/or a second transmit power.

When the communication apparatus 1801 is the first terminal device, in a possible implementation, the processor 1802 is specifically configured to receive a downlink signal from a network device through the transceiver 1803. The processor 1802 is specifically configured to estimate a downlink path loss based on a measurement result obtained by measuring the downlink signal.

When the communication apparatus 1801 is the first terminal device, in a possible implementation, the processor 1802 is specifically configured to receive first information from a second terminal device through the transceiver 1803, where the first information includes information about a receive power of a sidelink signal or information about a sidelink path loss from the first terminal device, or information about a transmit power of a sidelink signal sent by the second terminal device. The processor 1802 is specifically configured to determine the sidelink path loss based on the first information.

When the communication apparatus 1801 is the first terminal device, in a possible implementation, the processor 1802 is specifically configured to send first configuration information to a second terminal device through the transceiver 1803.

When the communication apparatus 1801 is the first terminal device, in a possible implementation, the processor 1802 is specifically configured to: when obtaining a receive power of a third sidelink signal, determine a sidelink path loss based on the receive power of the third sidelink signal and a transmit power of the third sidelink signal.

When the communication apparatus 1801 is the first terminal device, in a possible implementation, the processor 1802 is specifically configured to: when not obtaining a receive power of a third sidelink signal, determine a sidelink path loss based on a receive power of a fourth sidelink signal and a transmit power of the fourth sidelink signal.

When the communication apparatus 1801 is the first terminal device, in a possible implementation, the processor 1802 is specifically configured to receive second configuration information through the transceiver 1803.

When the communication apparatus 1801 is the first terminal device, in a possible implementation, the processor 1802 is specifically configured to: determine a quasi-sidelink path loss based on first information, and determine a sidelink path loss based on the quasi-sidelink path loss and a first offset, where the first offset is determined based on a difference between a frequency of a sidelink signal associated with the quasi-sidelink path loss and a frequency of a first sidelink positioning reference signal.

When the communication apparatus 1801 is the first terminal device, in a possible implementation, the processor 1802 is specifically configured to: determine a fifth transmit power based on a second parameter and a sidelink path loss, and determine a second transmit power based on the fifth transmit power and a second offset, where the second offset is determined based on a difference between a frequency of a sidelink signal associated with the sidelink path loss and a frequency of a first sidelink positioning reference signal.

When the communication apparatus 1801 is the first terminal device, in a possible implementation, the processor 1802 is specifically configured to determine a target transmit power based on a smaller value of a first value, a third transmit power, and a fourth transmit power. The first value is a smaller value of a first transmit power and a second transmit power.

When the communication apparatus 1801 is the first terminal device, in a possible implementation, the processor 1802 is specifically configured to: send a second sidelink positioning reference signal through the transceiver 1803, and receive a power feedback parameter from a second terminal device, where the power feedback parameter is determined based on a receive power of the second sidelink positioning reference signal and a receive power of a sidelink positioning reference signal that a second terminal device expects to receive. The processor 1802 is specifically configured to determine a target transmit power based on a power control parameter and the power feedback parameter.

When the communication apparatus 1801 is the first terminal device, in a possible implementation, the processor 1802 is specifically configured to: adjust a first transmit power based on a power feedback parameter, and determine a target transmit power based on an adjusted first transmit power.

When the communication apparatus 1801 is the first terminal device, in a possible implementation, the processor 1802 is specifically configured to adjust a second transmit power based on a power feedback parameter; and the first terminal device determines a target transmit power based on an adjusted second transmit power.

When the communication apparatus 1801 is the first terminal device, in a possible implementation, the processor 1802 is specifically configured to: determine a quasi-target transmit power based on a first transmit power and/or a second transmit power, and determine a target transmit power based on the quasi-target transmit power and a power feedback parameter.

When the communication apparatus 1801 is the first terminal device, in a possible implementation, the processor 1802 is specifically configured to adjust a transmit power of a second sidelink positioning reference signal based on a power feedback parameter, to obtain a target transmit power, where the transmit power of the second sidelink positioning reference signal is determined based on a power control parameter.

When the communication apparatus 1801 is the network device, the processor 1802 is configured to send a power control parameter to a first terminal device through the transceiver 1803, where the power control parameter has an association relationship with a resource pool of a sidelink positioning reference signal; and the power control parameter is used by the first terminal device to determine a target transmit power for sending a first sidelink positioning reference signal.

When the communication apparatus 1801 is the network device, in a possible implementation, the processor 1802 is further configured to send first configuration information to a second terminal device through the transceiver 1803.

When the communication apparatus 1801 is the network device, in a possible implementation, the processor 1802 is further configured to send second configuration information to a first terminal device through the transceiver 1803.

When the communication apparatus 1801 is the second terminal device, the processor 1802 is configured to send first information through the transceiver 1803, where the first information is used by a first terminal device to determine a sidelink path loss; and the first information includes information about a receive power of a sidelink signal or information about the sidelink path loss from the first terminal device, or information about a transmit power of a sidelink signal sent by the second terminal device.

When the communication apparatus 1801 is the second terminal device, in a possible implementation, the processor 1802 is further configured to receive first configuration information through the transceiver 1803.

When the communication apparatus 1801 is the second terminal device, in a possible implementation, the processor 1802 is further configured to send a third sidelink signal through the transceiver 1803.

When the communication apparatus 1801 is the second terminal device, in a possible implementation, the processor 1802 is further configured to send a fourth sidelink signal through the transceiver 1803.

When the communication apparatus 1801 is the second terminal device, in a possible implementation, the processor 1802 is further configured to send second configuration information to a first terminal device through the transceiver 1803.

For concepts, explanations, detailed descriptions, and other steps of the communication apparatus that are related to the technical solutions provided in embodiments of this application, refer to descriptions of the content in the foregoing methods or other embodiments. Details are not described herein.

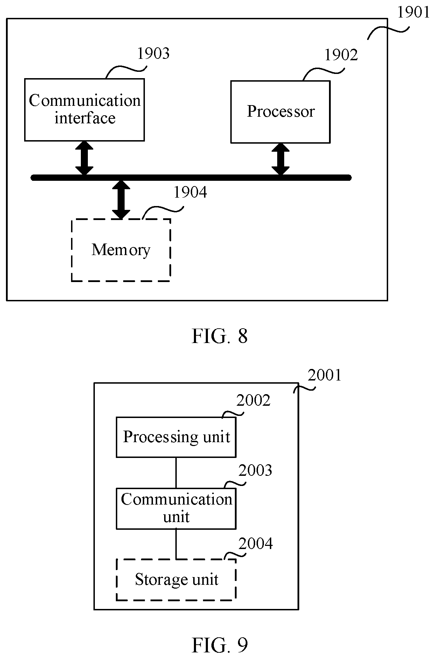

According to the foregoing method, **FIG. 8** is a diagram of a structure of a communication apparatus according to an embodiment of this application. As shown in FIG. 8, the communication apparatus 1901 may include a communication interface 1903 and a processor 1902. Further, the communication apparatus 1901 may include a memory 1904. In the figure, the memory 1904 is shown by dashed lines. This further indicates that the memory is optional. The communication interface 1903 is configured to input and/or output information. The processor 1902 is configured to execute a computer program or instructions, so that the communication apparatus 1901 implements the method on the first terminal device side in any one of the related solutions in FIG. 3, FIG. 4, FIG. 5, or FIG. 6, or the communication apparatus 1901 implements the method on the second terminal device side in any one of the related solutions in FIG. 3, FIG. 4, FIG. 5, or FIG. 6. In this embodiment of this application, the communication interface 1903 may implement the solution implemented by the transceiver 1803 in FIG. 7, the processor 1902 may implement the solution implemented by the processor 1802 in FIG. 7, and the memory 1904 may implement the solution implemented by the memory 1804 in FIG. 7. Details are not described herein again.

Based on the foregoing embodiments and a same concept, **FIG. 9** is a diagram of a communication apparatus according to an embodiment of this application. As shown in FIG. 9, the communication apparatus 2001 may be a first terminal device or a second terminal device, or may be a chip or a circuit, for example, a chip or a circuit that may be disposed in the first terminal device or the second terminal device.

The communication apparatus 2001 includes a processing unit 2002 and a communication unit 2003. Further, the communication apparatus 2001 may include a storage unit 2004, or may not include a storage unit 2004. In the figure, the storage unit 2004 is shown by dashed lines. This further indicates that the memory is optional.

When the communication apparatus 2001 is the first terminal device, the processing unit 2002 is configured to:

through the communication unit 2003, receive a power control parameter from a network device, and send a first sidelink positioning reference signal based on a target transmit power, where the target transmit power is determined based on the power control parameter, and the power control parameter has an association relationship with a resource pool of a sidelink positioning reference signal.

When the communication apparatus 2001 is the network device, the processing unit 2002 is configured to send a power control parameter to a first terminal device through the communication unit 2003, where the power control parameter has an association relationship with a resource pool of a sidelink positioning reference signal; and the power control parameter is used by the first terminal device to determine a target transmit power for sending a first sidelink positioning reference signal.

When the communication apparatus 2001 is the second terminal device, the processing unit 2002 is configured to send first information through the communication unit 2003, where the first information is used by a first terminal device to determine a sidelink path loss; and the first information includes information about a receive power of a sidelink signal or information about the sidelink path loss from the first terminal device, or information about a transmit power of a sidelink signal sent by the second terminal device.

The communication unit 2003 in this embodiment of this application is configured to input and/or output information. The processing unit 2002 is configured to execute a computer program or instructions, so that the communication apparatus 2001 implements the method on the first terminal device side in any one of the related solutions in FIG. 3, FIG. 4, FIG. 5, or FIG. 6, or the communication apparatus 2001 implements the method on the second terminal device side in any one of the related solutions in FIG. 3, FIG. 4, FIG. 5, or FIG. 6. In this embodiment of this application, the communication unit 2003 may implement the solution implemented by the transceiver 1803 in FIG. 7, the processing unit 2002 may implement the solution implemented by the processor 1802 in FIG. 7, and the storage unit 2004 may implement the solution implemented by the memory 1804 in FIG. 7. Details are not described herein again.

According to the method provided in embodiments of this application, this application further provides a computer program product. The computer program product includes computer program code or instructions. When the computer program code or the instructions are run on a computer, the computer is enabled to perform the method in any one of the embodiments shown in FIG. 3, FIG. 4, FIG. 5, or FIG. 6.

According to the method provided in embodiments of this application, this application further provides a computer-readable storage medium. The computer-readable storage medium stores program code. When the program code is run on a computer, the computer is enabled to perform the method in any one of the embodiments shown in FIG. 3, FIG. 4, FIG. 5, or FIG. 6.

According to the method provided in embodiments of this application, this application further provides a chip system. The chip system may include a processor. The processor is coupled to a memory, and may be configured to perform the method in any one of the embodiments shown in FIG. 3, FIG. 4, FIG. 5, or FIG. 6. Optionally, the chip system further includes the memory. The memory is configured to store a computer program (which may also be referred to as code or instructions). The processor is configured to invoke a computer program from the memory and run the computer program, so that a device on which a chip system is installed performs the method in any one of the embodiments shown in FIG. 3, FIG. 4, FIG. 5, or FIG. 6.

According to the method provided in embodiments of this application, this application further provides a system. The system includes the foregoing one or more first terminal devices, the foregoing one or more second terminal devices, and the foregoing network device.

All or some of the foregoing embodiments may be implemented by software, hardware, firmware, or any combination thereof. When the software is used to implement embodiments, all or some of embodiments may be implemented in a form of a computer program product. The computer program product includes one or more computer instructions. When the computer instructions are loaded and executed on a computer, procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state drive (solid state drive, SSD)), or the like.

It should be noted that a part of this patent application document includes copyright-protected content. Except for making copies of patent documents or recorded content of the patent documents in the China National Intellectual Property Administration, the copyright owner reserves the copyright.

The first terminal device, the network device, and the second terminal device in the foregoing apparatus embodiments correspond to the first terminal device, the network device, and the second terminal device in the foregoing method embodiments. A corresponding module or unit performs a corresponding step. For example, a communication unit (a transceiver) performs a receiving or sending step in the method embodiments, and a step other than the sending step and the receiving step may be performed by a processing unit (a processor). For a function of a specific unit, refer to a corresponding method embodiment. There may be one or more processors.

Terminologies such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or an execution thread, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the internet interacting with other systems by using the signal).

A person of ordinary skill in the art may be aware that, in combination with illustrative logical blocks (illustrative logical blocks) described in embodiments disclosed in this specification and steps (steps) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, in other words, may be located in one place, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. When functions are implemented in the form of a software functional unit and sold or used as an independent product, the functions may be stored in a computer-readable storage medium.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1.  A communication method, comprising:

    receiving, by a first terminal device, a power control parameter from a network device, wherein the power control parameter has an association relationship with a resource pool of a sidelink positioning reference signal;
    determining, by the first terminal device, a target transmit power based on the power control parameter; and
    sending, by the first terminal device, a first sidelink positioning reference signal based on the target transmit power.

2. The method according to claim 1, wherein the power control parameter comprises one or more of a first parameter, a second parameter, or a third transmit power;

> the first parameter comprises a third parameter and/or a downlink path loss adjustment coefficient, and the third parameter is an initial power control value based on a downlink path loss of the first terminal device;
> the second parameter comprises a fourth parameter and/or a sidelink path loss adjustment coefficient, and the fourth parameter is an initial power control value based on a sidelink path loss of the first terminal device; and
> the third transmit power comprises a transmit power of the network device based on a channel busy ratio CBR of a resource pool corresponding to the first sidelink positioning reference signal and a transmission priority corresponding to the first sidelink positioning reference signal.

3. The method according to claim 2, wherein the determining, by the first terminal device, a target transmit power based on the power control parameter comprises:

> determining, by the first terminal device, the target transmit power based on a first transmit power and/or a second transmit power, wherein
> the first transmit power is determined based on the first parameter and the downlink path loss, and the second transmit power is determined based on the second parameter and the sidelink path loss.

4. The method according to claim 3, wherein before the determining, by the first terminal device, the target transmit power based on a first transmit power and/or a second transmit power, the method further comprises:

> receiving, by the first terminal device, first information from a second terminal device, wherein the first information comprises information about a receive power of a sidelink signal or information about the sidelink path loss from the first terminal device, or information about a transmit power of a sidelink signal sent by the second terminal device; and
> determining, by the first terminal device, the sidelink path loss based on the first information.

5. The method according to claim 4, wherein the first information comprises at least one of the following content:

> information about a receive power of a first sidelink signal, wherein the first sidelink signal is a sidelink signal received by the second terminal device from the first terminal device, and a type of the first sidelink signal comprises a sidelink positioning reference signal;
> information about a receive power of a second sidelink signal, wherein the second sidelink signal is a sidelink signal received by the second terminal device from the first terminal device, and a type of the second sidelink signal comprises a physical sidelink shared channel PSSCH demodulation reference signal DMRS or a physical sidelink control channel PSCCH DMRS;
> the information about the sidelink path loss, wherein the information about the sidelink path loss is determined based on the first sidelink signal or the second sidelink signal;
> information about a transmit power of a third sidelink signal, wherein the third sidelink signal is from the second terminal device, and a type of the third sidelink signal comprises a sidelink positioning reference signal; or
> information about a transmit power of a fourth sidelink signal, wherein the fourth sidelink signal is from the second terminal device, the third sidelink signal comprises a sidelink positioning reference signal, and a type of the fourth sidelink signal comprises a PSSCH DMRS or a PSCCH DMRS.

6. The method according to claim 5, wherein before the receiving, by the first terminal device, first information from a second terminal device, the method further comprises:

> sending, by the first terminal device, first configuration information to the second terminal device, wherein the first configuration information indicates information about a sidelink signal used to determine the sidelink path loss; and
> the first configuration information comprises at least one of the following content:
>
>> information about a first signal type, wherein the first signal type is a type of the sidelink signal used to determine the sidelink path loss, and the first signal type comprises a sidelink positioning reference signal type;
>> a first resource identifier, wherein the first resource identifier comprises a resource identifier of the first sidelink signal; or

a first resource set identifier, wherein the first resource set identifier comprises a resource set identifier corresponding to a resource of the first sidelink signal.

7. The method according to any one of claims 4 to 6, wherein the determining, by the first terminal device, the sidelink path loss based on the first information comprises:

determining, by the first terminal device, a quasi-sidelink path loss based on the first information; and
determining, by the first terminal device, the sidelink path loss based on the quasi-sidelink path loss and a first offset, wherein the first offset is determined based on a difference between a frequency of a sidelink signal associated with the quasi-sidelink path loss and a frequency of the first sidelink positioning reference signal.

8. The method according to any one of claims 4 to 6, wherein before the determining, by the first terminal device, the target transmit power based on a first transmit power and/or a second transmit power, the method further comprises:

determining, by the first terminal device, a fifth transmit power based on the second parameter and the sidelink path loss; and
determining, by the first terminal device, the second transmit power based on the fifth transmit power and a second offset, wherein the second offset is determined based on a difference between a frequency of a sidelink signal associated with the sidelink path loss and a frequency of the first sidelink positioning reference signal.

9. The method according to any one of claims 3 to 8, wherein the determining, by the first terminal device, the target transmit power based on a first transmit power and/or a second transmit power comprises:

determining, by the first terminal device, the target transmit power based on a smaller value in one or more of a first value, the third transmit power, or a fourth transmit power, wherein
the first value is a smaller value of the first transmit power and the second transmit power, and the fourth transmit power comprises a transmit power of the first terminal device.

10. The method according to any one of claims 3 to 9, wherein before the determining, by the first terminal device, a target transmit power based on the power control parameter, the method further comprises:

sending, by the first terminal device, a second sidelink positioning reference signal; and
receiving, by the first terminal device, a power feedback parameter from the second terminal device, wherein the power feedback parameter is determined based on a receive power of the second sidelink positioning reference signal and a receive power of a sidelink positioning reference signal that the second terminal device expects to receive; and
the determining, by the first terminal device, a target transmit power based on the power control parameter comprises:
determining, by the first terminal device, the target transmit power based on the power control parameter and the power feedback parameter.

11. A communication method, comprising:

determining, by a network device, a power control parameter, wherein the power control parameter has an association relationship with a resource pool of a sidelink positioning reference signal; and
sending, by the network device, the power control parameter to a first terminal device, wherein the power control parameter is used by the first terminal device to determine a target transmit power for sending a first sidelink positioning reference signal.

12. The method according to claim 11, wherein the power control parameter comprises one or more of a first parameter, a second parameter, or a third transmit power;

the first parameter comprises a third parameter and/or a downlink path loss adjustment coefficient, and the third parameter is an initial power control value based on a downlink path loss of the first terminal device;
the second parameter comprises a fourth parameter and/or a sidelink path loss adjustment coefficient, and the fourth parameter is an initial power control value based on a sidelink path loss of the first terminal device; and
the third transmit power comprises a transmit power of the network device based on a channel busy ratio CBR of a resource pool corresponding to the first sidelink positioning reference signal and a transmission priority corresponding to the first sidelink positioning reference signal.

13. The method according to claim 11 or 12, wherein the method further comprises:

sending, by the network device, first configuration information to a second terminal device, wherein the first configuration information indicates information about a sidelink signal used to determine the sidelink path loss; and
the first configuration information comprises at least one of the following content:

information about a first signal type, wherein the first signal type is a type of the sidelink signal used to determine the sidelink path loss, and the first signal type comprises a sidelink positioning reference signal type;
a first resource identifier, wherein the first resource identifier comprises a resource identifier of the first sidelink signal; or
a first resource set identifier, wherein the first resource set identifier comprises a resource set identifier corresponding to a resource of the first sidelink signal.

14. A communication apparatus, used in a first terminal device, and comprising a communication interface and a processor, wherein the processor is configured to:

receive a power control parameter from a network device through the communication interface, wherein the power control parameter has an association relationship with a resource pool of a sidelink positioning reference signal;
determine a target transmit power based on the power control parameter; and
send a first sidelink positioning reference signal based on the target transmit power through the communication interface.

15. The communication apparatus according to claim 14, wherein the power control parameter comprises one or more of a first parameter, a second parameter, or a third transmit power;

the first parameter comprises a third parameter and/or a downlink path loss adjustment coefficient, and the third parameter is an initial power control value based on a downlink path loss of the first terminal device;
the second parameter comprises a fourth parameter and/or a sidelink path loss adjustment coefficient, and the fourth parameter is an initial power control value based on a sidelink path loss of the first terminal device; and
the third transmit power comprises a transmit power of the network device based on a channel busy ratio CBR of a resource pool corresponding to the first sidelink positioning reference signal and a transmission priority corresponding to the first sidelink positioning reference signal.

16. The communication apparatus according to claim 15, wherein the processor is specifically configured to:

determine the target transmit power based on a first transmit power and/or a second transmit power, wherein the first transmit power is determined based on the first parameter and the downlink path loss, and the second transmit power is determined based on the second parameter and the sidelink path loss.

17. The communication apparatus according to claim 16, wherein the processor is further configured to:

receive first information from a second terminal device through the communication interface, wherein the first information comprises information about a receive power of a sidelink signal or information about the sidelink path loss from the first terminal device, or information about a transmit power of a sidelink signal sent by the second terminal device; and
determine the sidelink path loss based on the first information.

18. The communication apparatus according to claim 17, wherein the first information comprises at least one of the following content:

information about a receive power of a first sidelink signal, wherein the first sidelink signal is a sidelink signal received by the second terminal device from the first terminal device, and a type of the first sidelink signal comprises a sidelink positioning reference signal;

information about a receive power of a second sidelink signal, wherein the second sidelink signal is a sidelink signal received by the second terminal device from the first terminal device, and a type of the second sidelink signal comprises a physical sidelink shared channel PSSCH demodulation reference signal DMRS or a physical sidelink control channel PSCCH DMRS;

the information about the sidelink path loss, wherein the information about the sidelink path loss is determined based on the first sidelink signal or the second sidelink signal;

information about a transmit power of a third sidelink signal, wherein the third sidelink signal is from the second terminal device, and a type of the third sidelink signal comprises a sidelink positioning reference signal; or

information about a transmit power of a fourth sidelink signal, wherein the fourth sidelink signal is from the second terminal device, the third sidelink signal comprises a sidelink positioning reference signal, and a type of the fourth sidelink signal comprises a PSSCH DMRS or a PSCCH DMRS.

19. The communication apparatus according to claim 18, wherein the processor is further configured to:

send first configuration information to the second terminal device through the communication interface, wherein the first configuration information indicates information about a sidelink signal used to determine the sidelink path loss; and

the first configuration information comprises at least one of the following content:

information about a first signal type, wherein the first signal type is a type of the sidelink signal used to determine the sidelink path loss, and the first signal type comprises a sidelink positioning reference signal type;

a first resource identifier, wherein the first resource identifier comprises a resource identifier of the first sidelink signal; or

a first resource set identifier, wherein the first resource set identifier comprises a resource set identifier corresponding to a resource of the first sidelink signal.

20. The communication apparatus according to any one of claims 17 to 19, wherein the processor is specifically configured to:

determine a quasi-sidelink path loss based on the first information; and

determine the sidelink path loss based on the quasi-sidelink path loss and a first offset, wherein the first offset is determined based on a difference between a frequency of a sidelink signal associated with the quasi-sidelink path loss and a frequency of the first sidelink positioning reference signal.

21. The communication apparatus according to any one of claims 17 to 19, wherein the processor is specifically configured to:

determine a fifth transmit power based on the second parameter and the sidelink path loss; and

determine the second transmit power based on the fifth transmit power and a second offset, wherein the second offset is determined based on a difference between a frequency of a sidelink signal associated with the sidelink path loss and a frequency of the first sidelink positioning reference signal.

22. The communication apparatus according to any one of claims 16 to 21, wherein the processor is specifically configured to:

determine the target transmit power based on a smaller value in one or more of a first value, the third transmit power, or a fourth transmit power, wherein

the first value is a smaller value of the first transmit power and the second transmit power, and the fourth transmit power comprises a transmit power of the first terminal device.

23. The communication apparatus according to any one of claims 16 to 22, wherein the processor is further configured to:

send a second sidelink positioning reference signal through the communication interface; and

receive a power feedback parameter from the second terminal device through the communication interface, wherein the power feedback parameter is determined based on a receive power of the second sidelink positioning reference signal and a receive power of a sidelink positioning reference signal that the second terminal device expects to receive; and

the processor is specifically configured to:
determine the target transmit power based on the power control parameter and the power feedback parameter.

24. A communication apparatus, comprising a communication interface and a processor, wherein the processor is configured to:

   determine a power control parameter, wherein the power control parameter has an association relationship with a resource pool of a sidelink positioning reference signal;
   send the power control parameter to a first terminal device through the communication interface, wherein the power control parameter is used by the first terminal device to determine a target transmit power for sending a first sidelink positioning reference signal.

25. The communication apparatus according to claim 24, wherein the power control parameter comprises one or more of a first parameter, a second parameter, or a third transmit power;

   the first parameter comprises a third parameter and/or a downlink path loss adjustment coefficient, and the third parameter is an initial power control value based on a downlink path loss of the first terminal device;
   the second parameter comprises a fourth parameter and/or a sidelink path loss adjustment coefficient, and the fourth parameter is an initial power control value based on a sidelink path loss of the first terminal device; and
   the third transmit power comprises a transmit power of the network device based on a channel busy ratio CBR of a resource pool corresponding to the first sidelink positioning reference signal and a transmission priority corresponding to the first sidelink positioning reference signal.

26. The communication apparatus according to claim 24 or 25, wherein the processor is further configured to:

   send first configuration information to a second terminal device through the communication interface, wherein the first configuration information indicates information about a sidelink signal used to determine the sidelink path loss; and
   the first configuration information comprises at least one of the following content:

      information about a first signal type, wherein the first signal type is a type of the sidelink signal used to determine the sidelink path loss, and the first signal type comprises a sidelink positioning reference signal type;
      a first resource identifier, wherein the first resource identifier comprises a resource identifier of the first sidelink signal; or
      a first resource set identifier, wherein the first resource set identifier comprises a resource set identifier corresponding to a resource of the first sidelink signal.

27. A communication apparatus, comprising a processor and a memory, wherein

   the memory is configured to store a computer program or instructions; and
   the processor is configured to execute the computer program or instructions in the memory, so that the method according to any one of claims 1 to 10 is performed, or the method according to any one of claims 11 to 13 is performed.

28. A communication apparatus, comprising a processing module and a communication module, wherein the processing module is configured to perform, through the communication module, the method according to any one of claims 1 to 10, or perform the method according to any one of claims 11 to 13.

29. A computer-readable storage medium, wherein the computer-readable storage medium stores computer-executable instructions; and when the computer-executable instructions are invoked by a computer, the method according to any one of claims 1 to 10 is performed, or the method according to any one of claims 11 to 13 is performed.

30. A chip system, comprising a communication interface and a processor, wherein

   the communication interface is configured to input and/or output signaling or data; and
   the processor is configured to execute a computer-executable program, so that a device on which the chip system is installed performs the method according to any one of claims 1 to 10, or performs the method according to any one of claims 11 to 13.

Network device

Uu                                              Uu

PC5

Terminal                                      Terminal
device                                        device

(a)

Network device

Uu

PC5

Terminal
device

Terminal device

(b)

PC5

Terminal device                  Terminal device

(c)

FIG. 1

FIG. 2

FIG. 3

FIG. 4

First terminal device

Second terminal device

500: Second configuration information

501: The second terminal device sends a third sidelink signal

502: Information about a transmit power of the third sidelink signal

503: Fourth sidelink signal

504: Information about a transmit power of the fourth sidelink signal

505: Determine whether to obtain a receive power of the third sidelink signal

Obtain

Not obtain

506: Determine a sidelink path loss based on the transmit power of the third sidelink signal and the receive power of the third sidelink signal

507: Obtain a receive power of the fourth sidelink signal

508: Determine a sidelink path loss based on the transmit power of the fourth sidelink signal and the receive power of the fourth sidelink signal

FIG. 5

```
┌──────────┐                                    ┌──────────┐
│  First   │                                    │  Second  │
│ terminal │                                    │ terminal │
│  device  │                                    │  device  │
└────┬─────┘                                    └────┬─────┘
     │                                               │
     │  601: Second sidelink positioning reference signal
     │──────────────────────────────────────────────▶│
     │                                               │
     │                          ┌────────────────────┴──────────┐
     │                          │ 602: The second terminal device│
     │                          │  determines a power feedback    │
     │                          │ parameter based on the second   │
     │                          │ sidelink positioning reference  │
     │                          │            signal               │
     │                          └────────────────────┬──────────┘
     │                                               │
     │        603: Power feedback parameter          │
     │◀──────────────────────────────────────────────│
     │                                               │
┌────┴──────────────────────────────┐               │
│ 604: The first terminal device     │               │
│ determines a target transmit power │               │
│ based on a power control parameter, │              │
│ and the first terminal device determines│          │
│ the target transmit power based on the  │          │
│ power control parameter and the power   │          │
│ feedback parameter                      │          │
└────┬────────────────────────────────────┘          │
     │                                               │
```

FIG. 6

FIG. 7

1901

1903

Communication
interface

1902

Processor

1904

Memory

FIG. 8

2001

2002

Processing unit

2003

Communication
unit

2004

Storage unit

FIG. 9

## INTERNATIONAL SEARCH REPORT

| International application No. |
| --- |
| **PCT/CN2023/104978** |

### A.   CLASSIFICATION OF SUBJECT MATTER

H04W 52/18(2009.01)i

According to International Patent Classification (IPC) or to both national classification and IPC

### B.   FIELDS SEARCHED

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

CNTXT, ENTXTC, WPABSC, DWPI, 3GPP: 侧链, 侧行, 副链, 辅链, 边链, 旁链, 旁路, 直连, 直接连接, 直通, 直接链路, 邻近通信, 装置到装置, 设备到设备, 用户设备到用户设备, 端到端, 定位, 参考信号, 功率, 控制, 资源, 池, 集, 组, 群, 参数, 发射, 发送, sidelink, SL, V2X, D2D, E2E, U2U, ProSe, PC5, positioning, RS, PRS, SPRS, SL-PRS, power, control, resource, pool, set, group, parameter, transmit

### C.   DOCUMENTS CONSIDERED TO BE RELEVANT

| Category* | Citation of document, with indication, where appropriate, of the relevant passages | Relevant to claim No. |
| --- | --- | --- |
| X | WO 2022059887 A1 (LG ELECTRONICS INC.) 24 March 2022 (2022-03-24) description, paragraphs [17]-[25], [259]-[271], and [421]-[453], and figure 12 | 1-30 |
| A | WO 2021148031 A1 (GUANGDONG OPPO MOBILE TELECOMMUNICATIONS CORP., LTD.) 29 July 2021 (2021-07-29) entire document | 1-30 |
| A | CN 114845371 A (CHINA MOBILE COMMUNICATION LTD., RESEARCH INSTITUTE et al.) 02 August 2022 (2022-08-02) entire document | 1-30 |
| A | ASUSTEK. "Remaining issues on sidelink power control" *3GPP TSG RAN WG1 #103-e R1-2008497*, 13 November 2020 (2020-11-13), entire document | 1-30 |

☐ Further documents are listed in the continuation of Box C.          ☑ See patent family annex.

| | |
| --- | --- |
| *      Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **13 August 2023** | **18 August 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/104978**

| Patent document cited in search report | | | Publication date (day/month/year) | Patent family member(s) | | | Publication date (day/month/year) |
|---|---|---|---|---|---|---|---|
| WO | 2022059887 | A1 | 24 March 2022 | KR | 20230069939 | A | 19 May 2023 |
| | | | | EP | 4216643 | A1 | 26 July 2023 |
| WO | 2021148031 | A1 | 29 July 2021 | None | | | |
| CN | 114845371 | A | 02 August 2022 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210966591